# EUROPEAN PATENT SPECIFICATION

(11) **EP 1 497 372 B1**
(45) Date of publication and mention of the grant of the patent: **17.01.2007**
(21) Application number: 03716999.2
(22) Date of filing: 07.04.2003
(51) Int. Cl.: C08L 71/12, C08L 63/00, C08G 65/48

(54) **THERMOSET COMPOSITION, METHOD AND ARTICLE**
THERMISCH AUSHAERTBARE ZUSAMMENSETZUNG, VERFAHREN UND ARTIKEL
COMPOSITION THERMODURCISSABLE, PROCEDE ET ARTICLE

(30) Priority: 09.04.2002 US 119406; 14.02.2003 US 248756
(43) Date of publication of application: 19.01.2005
(73) Proprietor: GENERAL ELECTRIC COMPANY, Schenectady, NY 12345 (US)
(72) Inventor: MERFELD, Glen, David, Loudonville, NY 12211 (US)
(74) Representative: Szary, Anne Catherine
(86) International application number: PCT/US2003/010523
(87) International publication number: WO 2003/087223

(56) References cited:
- WO-A-02/057365
- WO-A-03/002667
- US-A1- 2001 053 820

## Description

### CROSS REFERENCE TO RELATED APPLICATIONS

This application is a continuation-in-part of U.S. Application Serial No. 10/119,406, filed April 9, 2002, which is incorporated by reference herein in its entirety.

### BACKGROUND

Thermoset molding compositions known in the art are generally thermosetting resins containing inorganic fillers and/or fibers. Upon heating, thermoset monomers initially exhibit viscosities low enough to allow for melt processing and molding of an article from the filled monomer composition. Upon further heating, the thermosetting monomers react and cure to form hard resins with high stiffness. Some thermoset molding compositions derived from poly(arylene ether) and alkenyl aromatic monomers exhibit a substantial drop in viscosity when heated above approximately 60°C. At molding temperatures, often well above 60°C, the drop in viscosity may contribute to poor glass carry and non-uniform glass bundle distribution of molded thermoset compositions containing glass or other fillers.

One industrial use of thermoset compositions is the molding of automotive body panels. These panels preferably exhibit high dimensional stability and a smooth as-molded surface. It is also preferred that the dimensions of the molded parts conform closely to those of the molds used to prepare them.

Thermoset compositions based on unsaturated polyester resins and styrene are known to exhibit reduced shrinkage and improved surface properties when they incorporate a so-called low-profile additive, such as a polymethacrylate copolymer. See, for example, V. A. Pattison et al. *J. Appl. Poly. Sci*, volume 18, pages 2763-2771 (1974). Although known low-profile additives improve the performance of the polyester thermosets, there is a need for compositions exhibiting further improvements, particularly in surface characteristics.

U.S. Paten No. 6,352,782 to Yeager et al. describes thermoset compositions comprising poly(arylene ether) resins that have been capped with ethylenically unsaturated groups. These compositions exhibit desirable properties including high glass transition temperatures and low coefficients of thermal expansion. However, low-profile additives known for polyester thermosets are ineffective in the poly(arylen : ether)-containing compositions.

WO 03/00 2667A discloses a moldable thermosetting composition comprising a poly(arylen : ether), a thermosetting resin, a toughening agent, and an amine cure agent. The compositions may be conveniently prepared without solvents, and the poly(arylene ether) may be provided in the form of an easily dissolved solid concentrate with the thermosetting resin.

WO 02/05 7365A discloses a conductive thermosetting composition comprising a functionalized poly(arylene ether), an alkenyl aromatic monomer, an acryloyl monomer, and a conductive agent. After curing, the composition exhibits good stiffness, toughness, heat resistance, and conductivity, and it is useful in the fabrication of a variety of conductive components, including the bipolar plates of fuel cells.

US 2001/053820A discloses a thermosetting composition comprising a capped poly(arylene ether), an alkenyl aromatic monomer, and an acryloyl monomer. The compositions provide good flow properties and fast curing rates. After curing, the compositions exhibit good stiffness, toughness, heat resistance, and dielectric properties.

Some thermoset compositions exhibit tack in their curable form. Curable resins exhibiting tack makes them difficult to handle, adhering to items such as equipment, clothes, containers, etc. Tackiness may result in a uniform mass of resin in a storage container rather than individual pieces or pellets in a free-flowing form. Special packaging methods must be used to avoid such problems in the handling and transfer of tacky resins.

There remain a need for thermoset compositions exhibiting reduced shrinkage on molding and improved surface characteristics. There also remains a need for curable thermoset compositions having reduced tack. Finally, there remains a need to maintain sufficient viscosity of thermoset compositions during molding at elevated temperatures in order to provide good glass carry and uniform glass bundle distribution during molding.

### BRIEF SUMMARY

The above-described and other drawbacks are alleviated by a curable composition, comprising: a functionalized poly(arylene ether); an alkenyl aromatic monomer; an acryloyl monomer; and a polybutene, wherein the polybutene has a number average molecular weight of greater than or equal to about 300 atomic mass units.

Another embodiment is a curable composition, comprising: a functionalized poly(arylene ether); an alkenyl aromatic monomer; an acryloyl monomer; and a polybutene, wherein the polybutene has a number average molecular weight of greater than or equal to about 300 atomic mass units and wherein the curable composition is a sol-gel having a sol-gel transition temperature of greater than about 60°C.

Other embodiments, including a method of preparing a curable composition, a cured composition comprising the reaction product of the curable composition, and articles comprising the cured composition, are described below.

### BRIEF DESCRIPTION OF THE DRAWINGS

Figure 1 depicts a graph exhibiting viscosity at a mixing temperature (60°C) for thermoset molding compositions comprising polybutenes of varying molecular weights and viscosity at 25°C for the thermoset molding compositions after cooling;
Figure 2 depicts a graph exhibiting sol-gel transition temperatures for thermoset molding compositions comprising polybutenes of varying molecular weights;
Figure 3 is a confocal microscopy image of the 3-D nature of a sol-gel.

### DETAILED DESCRIPTION OF THE PREFERRED EMBODIMENTS

One embodiment is a curable composition, comprising: functionalized poly(arylene ether); an alkenyl aromatic monomer; an acryloyl monomer; and a polybutene, wherein the polybutene has a number average molecular weight of greater than or equal to about 300 atomic mass units. Preferably the curable composition comprises a sol-gel having a sol-gel transition temperature of greater than about 60°C, more preferably greater than or equal to about 75°C, and even more preferably greater than or equal to about 90°C. Compared to compositions without a polybutene having a number average molecular weight of greater than or equal to about 300 atomic mass units, these curable compositions exhibit a significantly smaller decrease in viscosity upon heating to molding temperatures thereby facilitating good glass carry and good glass bundle distribution. During an exemplary molding process, the curable composition containing filler is added to a heated mold. The curable composition is warmed to the mold temperature, turning from a waxy solid to a flowing resin when the sol-gel transition temperature has been achieved and/or surpassed. It is believed that the sol-gel compositions described herein exhibit greater glass carry and glass bundle distribution because the composition in the mold remains in a solidified form longer, thereby preventing the filler from settling out in the mold.

"Sol-gel" as defined herein is as a multiphase system that is nonflowing. The multiphase system can be described as a bicontinuous structure or an interconnected network. One phase of the bicontinuous structure may be described as the "scaffolding" and the other phase is interwoven within the scaffolding. The sol-gel transition temperature is the temperature below which the system phases separate and form an interconnected network, and above which the system phases become miscible and the gel dissolves into a flowing liquid. Sol-gel transition temperatures as high as 105°C may be achieved.

The composition comprises a functionalized poly(arylene ether), which may be a capped poly(arylene ether) or a ring-functionalized poly(arylene ether), each of which is defined below.

The functionalized poly(arylene ether) may be a capped poly(arylene ether). A capped poly(arylene ether) is defined herein as a poly(arylene ether) in which at least 50%, preferably at least 75%, more preferably at least 90%, yet more preferably at least 95%, even more preferably at least 99%, of the free hydroxyl groups present in the corresponding uncapped poly(arylene ether) have been functionalized by reaction with a capping agent.

The capped poly(arylene ether) may be represented by the structure

Q(J-K)_{y}

wherein Q is the residuum of a monohydric, dihydric, or polyhydric phenol, preferably the residuum of a monohydric or dihydric phenol, more preferably the residuum of a monohydric phenol; y is 1 to 100; J comprises repeating structural units having the formula 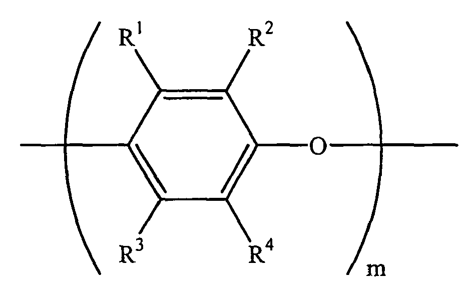 wherein m is 1 to about 200, preferably 2 to about 200, and R¹-R⁴ are each independently hydrogen, halogen, primary or secondary C₁-C₁₂ alkyl, C₂-C₁₂ alkenyl, C₂-C₁₂ alkynyl, C₁-C₁₂ aminoalkyl, C₁-C₁₂ hydroxyalkyl, phenyl, C₁-C₁₂ haloalkyl, C₁-C₁₂ hydrocarbonoxy, C₂-C₁₂ halohydrocarbonoxy wherein at least two carbon atoms separate the halogen and oxygen atoms, or the like; and K is a capping group produced by reaction of a phenolic hydroxyl group on the poly(arylene ether) with a capping reagent. The resulting capping group may be 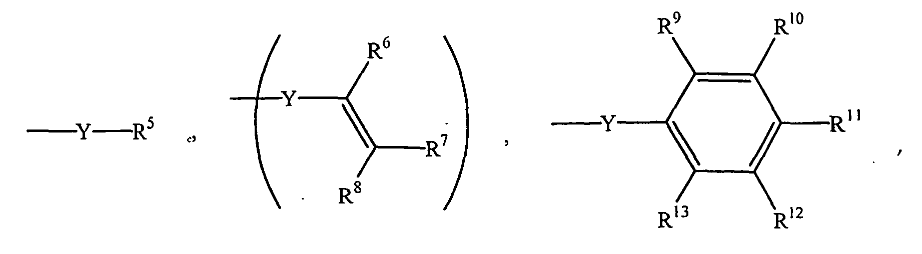 or the like, wherein R⁵ is C₁-C₁₂ alkyl, or the like; R⁶-R⁸ are each independently hydrogen, C₁-C₁₂ alkyl, C₂-C₁₂ alkenyl, C₆-C₁₈ aryl, C₇-C₁₈ alkyl-substituted aryl, C₇-C₁₈ aryl-substituted alkyl, C₂-C₁₂ alkoxycarbonyl, C₇-C₁₈ aryloxycarbonyl, C₇-C₁₈ alkyl-substituted aryloxycarbonyl, C₇-C₁₈ aryl-substituted alkoxycarbonyl, nitrile, formyl, carboxylate, imidate, thiocarboxylate, or the like; R⁹-R¹³ are each independently hydrogen, halogen, C₁-C₁₂ alkyl, hydroxy, amino, or the like; and wherein Y is a divalent group such as 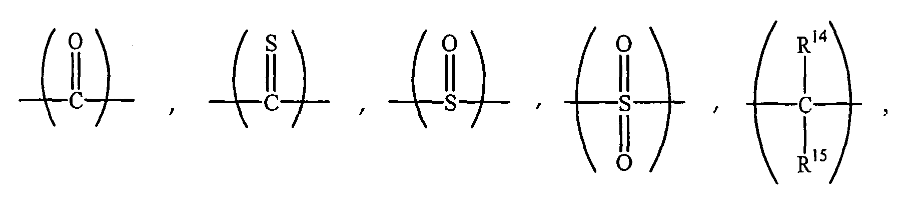 or the like, wherein R¹⁴ and R¹⁵ are each independently hydrogen, C₁-C₁₂ alkyl, or the like.

In one embodiment, Q is the residuum of a phenol, including polyfunctional phenols, and includes radicals of the structure 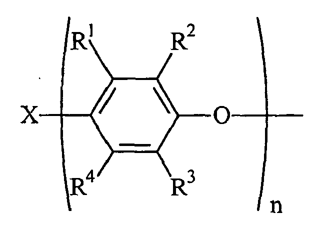 wherein R¹-R⁴ are each independently hydrogen, halogen, primary or secondary C₁-C₁₂ alkyl, C₁-C₁₂ alkenyl, C₁-C₁₂ alkynyl, C₁-C₁₂ aminoalkyl, C₁-C₁₂ hydroxyalkyl, phenyl, C₁-C₁₂ haloalkyl, C₁-C₁₂ aminoalkyl, C₁-C₁₂ hydrocarbonoxy, C₁-C₁₂ halohydrocarbonoxy wherein at least two carbon atoms separate the halogen and oxygen atoms, or the like; X may be hydrogen, C₁-C₁₂ alkyl, C₆-C₁₈ aryl, C₇-C₁₈ alkyl-substituted aryl, C₇-C₁₈ aryl-substituted alkyl, or any of the foregoing hydrocarbon groups containing at least one substituent such as carboxylic acid, aldehyde, alcohol, amino radicals, or the like; X also may be sulfur, sulfonyl, sulfuryl, oxygen, or other such bridging group having a valence of 2 or greater to result in various bis- or higher polyphenols; y and n are each independently 1 to about 100, preferably 1 to 3, and more preferably about 1 to 2; in a preferred embodiment, y=n. Q may also be the residuum of a diphenol, such as 2,2',6,6'-tetramethyl-4,4'-diphenol.

In one embodiment, the capped poly(arylene ether) is produced by capping a poly(arylene ether) consisting essentially of the polymerization product of at least one monohydric phenol having the structure 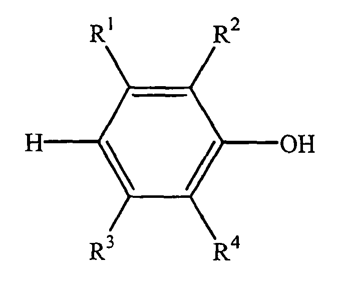 wherein R¹-R⁴ are each independently hydrogen, halogen, primary or secondary C₁-C₁₂ alkyl, C₂-C₁₂ alkenyl, C₂-C₁₂ alkynyl, C₁-C₁₂ aminoalkyl, C₁-C₁₂ hydroxyalkyl, phenyl, C₁-C₁₂ haloalkyl, C₁-C₁₂ hydrocarbonoxy, C₂-C₁₂ halohydrocarbonoxy wherein at least two carbon atoms separate the halogen and oxygen atoms, or the like. Suitable monohydric phenols include those described in U.S. Patent No. 3,306,875 to Hay, and highly preferred monohydric phenols include 2,6-dimethylphenol and 2,3,6-trimethylphenol. The poly(arylene ether) may be a copolymer of at least two monohydric phenols, such as 2,6-dimethylphenol and 2,3,6-trimethylphenol.

In a preferred embodiment, the capped poly(arylene ether) comprises at least one capping group having the structure 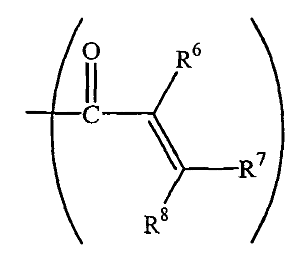 wherein R⁶-R⁸ are each independently hydrogen, C₁-C₁₂ alkyl, C₂-C₁₂ alkenyl, C₆-C₁₈ aryl, C₇-C₁₈ alkyl-substituted aryl, C₇-C₁₈ aryl-substituted alkyl, C₂-C₁₂ alkoxycarbonyl, C₇-C₁₈ aryloxycarbonyl, C₇-C₁₈ alkyl-substituted aryloxycarbonyl, C₇-C₁₈ aryl-substituted alkoxycarbonyl, nitrile, formyl, carboxylate, imidate, thiocarboxylate, or the like. Highly preferred capping groups include acrylate (R⁶=R⁷=R⁸=hydrogen) and methacrylate (R⁶=methyl, R⁷=R⁸=hydrogen).

In another preferred embodiment, the capped poly(arylene ether) comprises at least one capping group having the structure 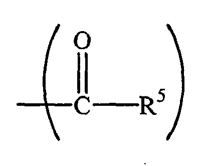 wherein R⁵ is C₁-C₁₂ alkyl, preferably C₁-C₆ alkyl, more preferably methyl, ethyl, or isopropyl. The present inventors have surprisingly found that the advantageous properties of their invention can be achieved even when the capped poly(arylene ether) lacks a polymerizable function such as a carbon-carbon double bond.

In yet another preferred embodiment, the capped poly(arylene ether) comprises at least one capping group having the structure 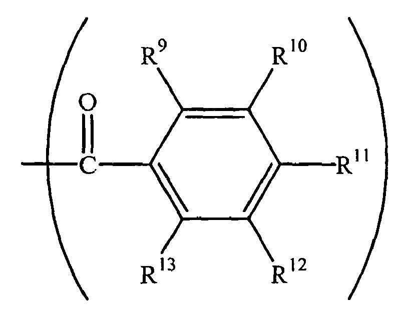 wherein R⁹-R¹³ are each independently hydrogen, halogen, C₁-C₁₂ alkyl, hydroxy, amino, or the like. Preferred capping groups of this type include salicylate (R⁹=hydroxy, R¹⁰-R¹³=hydrogen).

In still another preferred embodiment, the capped poly(arylene ether) comprises at least one capping group having the structure 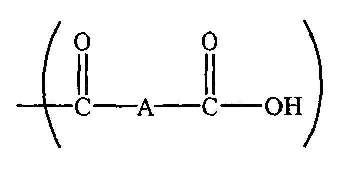 wherein A is a saturated or unsaturated C₂-C₁₂ divalent hydrocarbon group such as, for example, ethylene, 1,2-propylene, 1,3-propylene, 2-methyl-1,3-propylene, 2,2-dimethyl-1,3-propylene, 1,2-butylene, 1,3-butylene, 1,4-butylene, 2-methyl-1,4-butylene, 2,2-dimethyl-1,4-butylene, 2,3-dimethyl-1,4-butylene, vinylene (-CH=CH-), 1,2-phenylene, and the like. These capped poly(arylene ether) resins may conveniently be prepared, for example, by reaction of an uncapped poly(arylene ether) with a cyclic anhydride capping agent. Such cyclic anhydride capping agents include, for example, maleic anhydride, succinic anhydride, glutaric anhydride, adipic anhydride, phthalic anhydride, and the like.

There is no particular limitation on the method by which the capped poly(arylene ether) is prepared. The capped poly(arylene ether) may be formed by the reaction of an uncapped poly(arylene ether) with a capping agent. Capping agents include compounds known in the literature to react with phenolic groups. Such compounds include both monomers and polymers containing, for example, anhydride, acid chloride, epoxy, carbonate, ester, isocyanate, cyanate ester, or alkyl halide radicals. Capping agents are not limited to organic compounds as, for example, phosphorus and sulfur based capping agents also are included. Examples of capping agents include, for example, acetic anhydride, succinic anhydride, maleic anhydride, salicylic anhydride, polyesters comprising salicylate units, homopolyesters of salicylic acid, acrylic anhydride, methacrylic anhydride, glycidyl acrylate, glycidyl methacrylate, acetyl chloride, benzoyl chloride, diphenyl carbonates such as di(4-nitrophenyl)carbonate, acryloyl esters, methacryloyl esters, acetyl esters, phenylisocyanate, 3-isopropenyl-alpha,alpha-dimethylphenylisocyanate, cyanatobenzene, 2,2-bis(4-cyanatophenyl)propane), 3-(alpha-chloromethyl)styrene, 4-(alpha-chloromethyl)styrene, allyl bromide, and the like, carbonate and substituted derivatives thereof, and mixtures thereof. These and other methods of forming capped poly(arylene ether)s are described, for example, in U.S. Patent Nos. 3,375,228 to Holoch et al.; 4,148,843 to Goossens; 4,562,243, 4,663,402, 4,665,137, and 5,091,480 to Percec et al.; 5,071,922, 5,079,268, 5,304,600, and 5,310,820 to Nelissen et al.; 5,338,796 to Vianello et al.; and European Patent No. 261,574 B1 to Peters et al.

In a preferred embodiment, the capped poly(arylene ether) may be prepared by reaction of an uncapped poly(arylene ether) with an anhydride in an alkenyl aromatic monomer as solvent. This approach has the advantage of generating the capped poly(arylene ether) in a form that can be immediately blended with other components to form a curable composition; using this method, no isolation of the capped poly(arylene ether) or removal of unwanted solvents or reagents is required.

A capping catalyst may be employed in the reaction of an uncapped poly(arylene ether) with an anhydride. Examples of such compounds include those known to the art that are capable of catalyzing condensation of phenols with the capping agents described above. Useful materials are basic compounds including, for example, basic compound hydroxide salts such as sodium hydroxide, potassium hydroxide, tetraalkylammonium hydroxides, and the like; tertiary alkylamines such as tributyl amine, triethylamine, dimethylbenzylamine, dimethylbutylamine and the like; tertiary mixed alkyl-arylamines and substituted derivatives thereof such as N,N-dimethylaniline; heterocyclic amines such as imidazoles, pyridines, and substituted derivatives thereof such as 2-methylimidazole, 2-vinylimidazole, 4-(dimethylamino)pyridine, 4-(1-pyrrolino)pyridine, 4-(1-piperidino)pyridine, 2-vinylpyridine, 3-vinylpyridine, 4-vinylpyridine, and the like. Also useful are organometallic salts such as, for example, tin and zinc salts known to catalyze the condensation of, for example, isocyanates or cyanate esters with phenols. The organometallic salts useful in this regard are known to the art in numerous publications and patents well known to those skilled in this art.

The functionalized poly(arylene ether) may be a ring-functionalized poly(arylene ether). A ring-functionalized poly(arylene ether) is defined herein as a poly(arylene ether) comprising repeating structural units of the formula 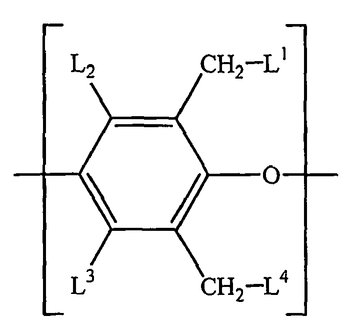 wherein each L¹-L⁴ is independently hydrogen, an alkenyl group, or an alkynyl group; wherein the alkenyl group is represented by 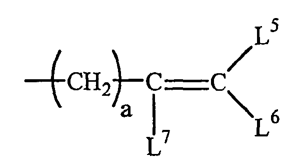 wherein L⁵-L⁷ are independently hydrogen or methyl, and a is an integer from 1 to 4; wherein the alkynyl group is represented by 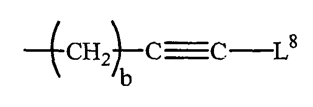 wherein L⁸ is hydrogen, methyl, or ethyl, and b is an integer from 1 to 4; and wherein about 0.02 mole percent to about 25 mole percent of the total L¹-L⁴ substituents in the ring-functionalized poly(arylene ether) are alkenyl and/or alkynyl groups. Within this range, it may be preferred to have at least about 0.1 mole percent, more preferably at least about 0.5 mole percent, alkenyl and/or alkynyl groups. Also within this range, it may be preferred to have up to about 15 mole percent, more preferably up to about 10 mole percent, alkenyl and/or alkynyl groups.

The ring-functionalized poly(arylene ether) may be prepared according to known methods. For example, an unfunctionalized poly(arylene ether) such as poly(2,6-dimethyl-1,4-phenylene ether) may be metalized with a reagent such as n-butyl lithium and subsequently reacted with an alkenyl halide such as allyl bromide and/or an alkynyl halide such as propargyl bromide. This and other methods for preparation of ring-functionalized poly(arylene ether) resins are described, for example, in U.S. Patent No. 4,923,932 to Katayose et al.

It will be understood that the poly(arylene ether)s described herein as "uncapped" or "unfunctionalized" comprise repeating structural units having the formula 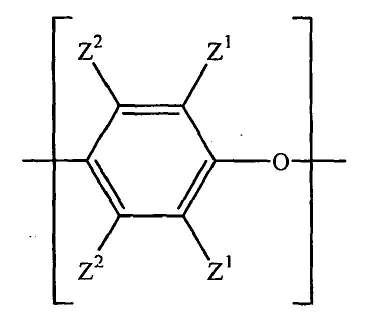 wherein for each structural unit, each Z¹ is independently hydrogen, halogen, primary or secondary C₁-C₁₂ alkyl, C₁-C₁₂ aminoalkyl, C₁-C₁₂ hydroxyalkyl, phenyl, C₁-C₁₂ haloalkyl, C₁-C₁₂ hydrocarbonoxy, C₁-C₁₂ halohydrocarbonoxy wherein at least two carbon atoms separate the halogen and oxygen atoms, or the like; and each Z² is independently halogen, primary or secondary C₁-C₁₂ alkyl, C₁-C₁₂ aminoalkyl, C₁-C₁₂ hydroxyalkyl, phenyl, C₁-C₁₂ haloalkyl, C₁-C₁₂ hydrocarbonoxy, C₁-C₁₂ halohydrocarbonoxy wherein at least two carbon atoms separate the halogen and oxygen atoms, or the like. Preferably, each Z¹ is C₁₋₄ alkyl, and each Z² is hydrogen or methyl.

There is no particular limitation on the molecular weight or intrinsic viscosity of the functionalized poly(arylene ether). In one embodiment, the composition may comprise a functionalized poly(arylene ether) having a number average molecular weight up to about 10,000 atomic mass units (AMU), preferably up to about 5,000 AMU, more preferably up to about 3,000 AMU. Such a functionalized poly(arylene ether) may be useful in preparing and processing the composition by reducing its viscosity.

In another embodiment, the composition may comprise a functionalized poly(arylene ether) having an intrinsic viscosity of about 0.08 to about 0.30 deciliters per gram (dL/g), preferably about 0.12 to about 0.30 dL/g, more preferably about 0.20 to about 0.30 dL/g as measured in chloroform at 25°C. Generally, the intrinsic viscosity of a functionalized poly(arylene ether) will vary insignificantly from the intrinsic viscosity of the corresponding unfunctionalized poly(arylene ether). Specifically, the intrinsic viscosity of a functionalized poly(arylene ether) will generally be within 10% of that of the unfunctionalized poly(arylene ether). These intrinsic viscosities may correspond approximately to number average molecular weights of about 5,000 to about 25,000 AMU. Within this range, a number average molecular weight of at least about 8,000 AMU may be preferred, and a number average molecular weight of at least about 10,000 AMU may be more preferred. Also within this range, a number average molecular weight up to about 20,000 AMU may be preferred. Such a functionalized poly(arylene ether) may provide the composition with a desirable balance of toughness and processability. It is expressly contemplated to employ blends of at least two functionalized poly(arylene ether)s having different molecular weights and intrinsic viscosities.

In a preferred embodiment, the functionalized poly(arylene ether) is substantially free of amino substituents, including alkylamino and dialkylamino substituents, wherein substantially free means that the functionalized poly(arylene ether) contains less than about 300 micrograms, preferably less than about 100 micrograms, of atomic nitrogen per gram of functionalized poly(arylene ether). Although many poly(arylene ether)s are synthesized by processes that result in the incorporation of amino substituents, the present inventors have found that thermoset curing rates are increased when the functionalized poly(arylene ether) is substantially free of amino substituents. Poly(arylene ether)s substantially free of amino substituents may be synthesized directly or generated by heating amino-substituted poly(arylene ether)s to at least about 200°C. Alternatively, if the functionalized poly(arylene ether) contains amino substituents, it may be desirable to cure the composition at a temperature less than about 200°C.

The composition may comprise a blend of at least two functionalized poly(arylene ethers). Such blends may be prepared from individually prepared and isolated functionalized poly(arylene ethers). Alternatively, such blends may be prepared by reacting a single poly(arylene ether) with at least two functionalizing agents. For example, a poly(arylene ether) may be reacted with two capping agents, or a poly(arylene ether) may be metalized and reacted with two unsaturated alkylating agents. In another alternative, a mixture of at least two poly(arylene ether) resins may be reacted with a single functionalizing agent.

The composition may comprise the functionalized poly(arylene ether) in an amount of comprising about 10 to about 90 parts by weight per 100 parts by weight total of the functionalized poly(arylene ether), the alkenyl aromatic monomer, the acryloyl monomer, and the polymeric additive. Within this range, it may be preferred to use a functionalized poly(arylene ether) amount of at least about 20 parts by weight, more preferably at least about 30 parts by weight. Also within this range, it may be preferred to use a functionalized poly(arylene ether) amount of up to about 80 parts by weight, more preferably up to about 70 parts by weight, yet more preferably up to about 60 parts by weight, still more preferably up to about 50 parts by weight.

The composition further comprises an alkenyl aromatic monomer. The alkenyl aromatic monomer may have the structure 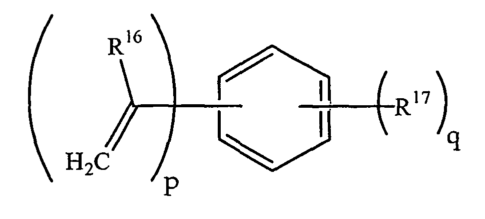 wherein each R¹⁶ is independently hydrogen, C₁-C₁₂ alkyl, C₂-C₁₂ alkenyl, C₂-C₁₂ alkynyl, C₆-C₁₈ aryl, or the like; each R¹⁷ is independently halogen, C₁-C₁₂ alkyl, C₁-C₁₂ alkoxyl, C₆-C₁₈ aryl, or the like; p is 1 to 4; and q is 0 to 5. When p=1, the alkenyl aromatic monomer is termed a monofunctional alkenyl aromatic monomer; when p=2-4, the alkenyl aromatic monomer is termed a polyfunctional alkenyl aromatic monomer. Suitable alkenyl aromatic monomers include styrene, alpha-methylstyrene, alpha-ethylstyrene, alpha-isopropylstyrene, alpha-tertiary-butylstyrene, alpha-phenylstyrene, and the like; halogenated styrenes such as chlorostyrene, dichlorostyrene, trichlorostyrene, bromostyrene, dibromostyrene, tribromostyrene, fluorostyrene, difluorostyrene, trifluorostyrene, tetrafluorostyrene, pentafluorostyrene, and the like; halogenated alkylstyrenes such as chloromethylstyrene, and the like; alkoxystyrenes such as methoxystyrene, ethoxystyrene, and the like; polyfunctional alkenyl aromatic monomers such as 1,2-divinylbenzene, 1,3-divinylbenzene, 1,4-divinylbenzene, trivinylbenzenes, 1,3-diisopropenylbenzene, 1,4-diisopropenylbenzene, and the like; and mixtures comprising at least one of the foregoing alkenyl aromatic monomers. In the foregoing substituted styrenes for which no substituent position is specified, the substituents may occupy any free position on the aromatic ring.

Preferred alkenyl aromatic monomers include styrene, alpha-methylstyrene, 2-methylstyrene, 3-methylstyrene, 4-methylstyrene, 2-t-butylstyrene, 3-t-butylstyrene, 4-t-butylstyrene, 1,3-divinylbenzene, 1,4-divinylbenzene, 1,3-diisopropenylbenzene, 1,4-diisopropenylbenzene, and the like, and mixtures comprising at least one of the foregoing alkenyl aromatic monomers. Preferred alkenyl aromatic monomers further include styrenes having from 1 to 5 halogen substituents on the aromatic ring, and mixtures comprising at least one such halogenated styrene.

Alkenyl aromatic monomers are commercially available from numerous sources. They may also be prepared by methods known in the art.

The composition may comprise the alkenyl aromatic monomer in an amount of about 10 to about 90 parts by weight per 100 parts by weight total of the functionalized poly(arylene ether), the alkenyl aromatic monomer, the acryloyl monomer, and the polymeric additive. Within this range, it may be preferred to use an alkenyl aromatic monomer amount of at least about 20 parts by weight, more preferably at least about 30 parts by weight. Also within this range, it may be preferred to use an alkenyl aromatic monomer amount of up to about 80 parts by weight, more preferably up to about 70 parts by weight, yet more preferably up to about 60 parts by weight, still more preferably up to about 50 parts by weight.

The composition further comprises an acryloyl monomer. The acryloyl monomer comprises at least one acryloyl moiety having the structure 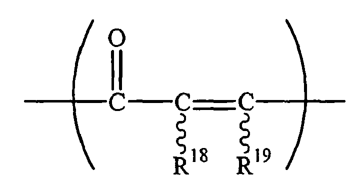 wherein R¹⁸ and R¹⁹ are each independently hydrogen, C₁-C₁₂ alkyl, or the like; and wherein R¹⁸ and R¹⁹ may be disposed either *cis* or *trans* about the carbon-carbon double bond. Preferably, R¹⁸ and R¹⁹ are each independently hydrogen or methyl. In one embodiment, the acryloyl monomer comprises at least two acryloyl moieties having the above structure and is termed a polyfunctional acryloyl monomer. In another embodiment, the acryloyl monomer comprises at least three acryloyl moieties having the above structure.

In one embodiment, the acryloyl monomer comprises at least one acryloyl moiety having the structure 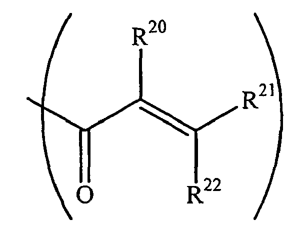 wherein R²⁰-R²² are each independently hydrogen, C₁-C₁₂ alkyl, C₂-C₁₂ alkenyl, C₆-C₁₈ aryl, C₇-C₁₈ alkyl-substituted aryl, C₇-C₁₈ aryl-substituted alkyl, C₂-C₁₂ alkoxycarbonyl, C₇-C₁₈ aryloxycarbonyl, C₈-C₁₈ alkyl-substituted aryloxycarbonyl, C₈-C₁₈ aryl-substituted alkoxycarbonyl, nitrile, formyl, carboxylate, imidate, thiocarboxylate, or the like. Preferably, R²⁰-R²² are each independently hydrogen or methyl. In one embodiment, the acryloyl monomer comprises at least two acryloyl moieties having the structure above. In another embodiment, the acryloyl monomer comprises at least three acryloyl moieties having the structure above.

Many additional suitable acryloyl monomers are described in U.S. Published Application No. 2001/0053820 A1 to Yeager et al.

In a preferred embodiment, the acryloyl monomer may include compounds having at least two acryloyl moieties per molecule, more preferably at least three acryloyl moieties per molecule. Illustrative examples include compounds produced by condensation of an acrylic or methacrylic acid with a di-epoxide, such as bisphenol-A diglycidyl ether, butanediol diglycidyl ether, or neopenylene glycol dimethacrylate. Specific examples include 1,4-butanediol diglycidylether di(meth)acrylate, bisphenol A diglycidylether dimethacrylate, and neopentylglycol diglycidylether di(meth)acrylate, and the like. Also included as acryloyl monomers are the condensation of reactive acrylate or methacrylate compounds with alcohols or amines to produce the resulting polyfunctional acrylates or polyfunctional acrylamides. Examples include N,N-bis(2-hydroxyethyl)(meth)acrylamide, methylenebis((meth)acrylamide), 1,6-hexamethylenebis((meth)acrylamide), diethylenetriamine tris((meth)acrylamide), bis(gamma-((meth)acrylamide)propoxy) ethane, beta-((meth)acrylamide) ethylacrylate, ethylene glycol di((meth)acrylate)), diethylene glycol di(meth)acrylate, tetraethylene glycol di(meth)acrylateglycerol di(meth)acrylate, glycerol tri(meth)acrylate, 1,3-propylene glycol di(meth)acrylate, dipropyleneglycol di(meth)acrylate, 1,4-butanediol di(meth)acrylate, 1,2,4-butanetriol tri(meth)acrylate, 1,6-hexanedioldi(meth)acrylate, 1,4-cyclohexanediol di(meth)acrylate, 1,4-benzenediol di(meth)acrylate, pentaerythritoltetra(meth)acrylate, 1,5-pentanediol di(meth)acrylate, trimethylolpropane di(meth)acrylate, trimethylolpropane tri(meth)acrylate), 1,3,5-triacryloylhexahydro-1,3,5-triazine, 2,2-bis(4-(2-(meth)acryloxyethoxy)phenyl)propane, 2,2-bis(4-(2-(meth)acryloxyethoxy)-3,5-dibromophenyl)propane, 2,2-bis((4-(meth)acryloxy)phenyl)propane, 2,2-bis((4-(meth)acryloxy)-3,5-dibromophenyl)propane, and the like, and mixtures comprising at least one of the foregoing acryloyl monomers. It will be understood that the fragment "(meth)acryl-" denotes either "acryl-" or "methacryl-".

Highly preferred acryloyl monomers include trimethylolpropane tri(meth)acrylate, 1,6-hexanediol di(meth)acrylate, ethylene glycol di(meth)acrylate, propylene glycol di(meth)acrylate, cyclohexanedimethanol di(meth)acrylate, butanedioldi(meth)acrylate, diethylene glycol di(meth)acrylate, triethylene glycol di(meth)acrylate, isobornyl(meth)acrylate, cyclohexyl (meth)acrylate, butyl(meth)acrylate, methyl (meth)acrylate, dibutyl fumarate, dibutyl maleate, glycidyl (meth)acrylate, ethyl (meth)acrylate, 2-ethylhexyl (meth)acrylate, hexyl (meth)acrylate, lauryl (meth)acrylate, stearyl (meth)acrylate, decyl (meth)acrylate, octyl (meth)acrylate, ethoxylated (3, 6, 9, 15, and 20) trimethylolpropane tri(meth)acrylate, propoxylated (3 and 6) trimethylolpropane tri(meth)acrylate, and the like, and mixtures comprising at least one of the foregoing acryloyl monomers.

Acryloyl monomers arc commercially available from numerous sources. They may also be prepared by methods known in the art.

The composition may comprise the acryloyl monomer in an amount of about 1 to about 50 parts by weight per 100 parts by weight total of the functionalized poly(arylene ether), the alkenyl aromatic monomer, the acryloyl monomer, and the polymeric additive. Within this range, it may be preferred to use an acryloyl monomer amount of at least about 5 parts by weight, more preferably at least about 10 parts by weight. Also within this range, it may be preferred to use an acryloyl monomer amount of up to about 40 parts by weight, more preferably up to about 30 parts by weight, yet more preferably up to 20 parts by weight.

Polybutenes suitable for use in the compositions include homopolymers and copolymers of 1-butene, 2-butene, and isobutene. The polybutene may preferably have a number average molecular weight of greater than or equal to about 300 atomic mass units to about 3,000 atomic mass units (AMU). Polybutenes may be prepared according to known methods such as those described in, for example, U.S. Patent No. 3,808,286 to Olund. They may also be obtained commercially as, for example, INDOPOL® Polybutenes L-4, L-6, L-10, L-14, H-15, H-25, H-35, H-40, H-50, II-100, H-300, H-1500, H-1900 from Amoco (these materials have number average molecular weights ranging from about 180 to about 2,500, polydispersity indices ranging from about 1 to about 2, and glass transition temperatures less than -65°C); and PARAPOL® Polybutenes 450, 700, 950, 1300, 2350, and 2700 from ExxonMobil Chemical.

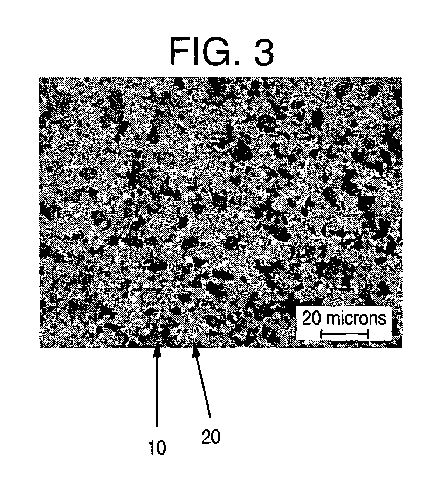

In another embodiment, the curable composition comprises a polybutene wherein the curable composition forms a sol-gel having a sol-gel transition temperature preferably greater than about 60°C, more preferably greater than or equal to about 75°C, and even more preferably greater than or equal to about 90°C. "Sol-gel" as defined herein is as a multiphase system that is nonflowing. The multiphase system can be described as a bicontinuous structure or an interconnected network. One phase of the bicontinuous structure may be described as the "scaffolding" and the other phase is interwoven within the scaffolding. As seen in Figure 3, a confocal microscopy image shows the structure or network of a sol-gel having a first phase (10) and a second phase (20). The first and the second phases can be seen interwoven with one another. Upon heating above the sol-gel transition temperature (T_{sol-gel}), the interconnected network dissolves and the system becomes miscible (that is, single phase). The sol-gel transition temperature is the temperature below which the system phases separate and form an interconnected network, and above which the system phases become miscible and the gel dissolves into a flowing liquid. Sol-gel transition temperatures as high as 105°C may be achieved. In a non-limiting example, a sol-gel may be formed from a curable composition comprising a functionalized poly(arylene ether), an alkenyl aromatic monomer, an acryloyl monomer, and a polybutene.

The curable composition sol-gels are believed to provide good glass carry and uniform glass bundle distribution when molded. Molding is a dynamic process where the uncured composition is simultaneously pressed and heated. The sol-gels retain greater viscosity in this transient process than a non-gelled analogue. It is believed that this retention of viscosity allows the resin to carry and push the glass fiber component of the composite to all parts of a molded object. Additionally, it is believed that the shear forces transferred by the higher viscosity resin helps to break apart individual fibers from glass bundles and thereby improve their distribution in the molded part.

Suitable polybutenes to create a curable composition sol-gel having a sol-gel transition temperature greater than about 60°C include homopolymers and copolymers of 1-butene, 2-butene, and isobutene having a number average molecular weight greater than or equal to about 300 atomic mass units (AMU) and less than or equal to about 1000 AMU, preferably greater than or equal to about 500 AMU and less than or equal to 800 AMU. Polybutenes having number average molecular weights of above 1000 AMU may be used although increasing viscosities may make processing difficult. Suitable commercially available polybutenes include INDOPOL® Polybutenes L-10, L-14, H-15, H-25, H-35, H-40, H-50, and H-100 from Amoco.

Preferred amounts of polybutenes for the sol-gel curable compositions may be about 0.1 to about 30 parts by weight per 100 parts by weight total of the functionalized poly(arylene ether), the alkenyl aromatic monomer, the acryloyl monomer, and the polybutene. Within this range, the amount of polybutene may be at least about 1, or at least about 5 parts by weight per 100 parts by weight total of the functionalized poly(arylene ether), the alkenyl aromatic monomer, the acryloyl monomer, and the polybutene. Also within this range, the amount of polybutene may be up to about 10, or up to about 20 parts by weight per 100 parts by weight total of the functionalized poly(arylene ether), the alkenyl aromatic monomer, the acryloyl monomer, and the polybutene.

The composition may, optionally, further comprise a curing catalyst to increase the curing rate of the unsaturated components. Curing catalysts, also referred to as initiators, are well known to the art and used to initiate the polymerization, cure or crosslink any of numerous thermoplastics and thermosets including unsaturated polyester, vinyl ester and allylic thermosets. Non-limiting examples of curing catalysts are those described in "Plastic Additives Handbook, 4^{th} Edition" R Gachter and H. Muller (eds.), P.P. Klemchuck (assoc. ed.) Hansen Publishers, New York 1993, and in U.S. Patent Nos. 5,407,972 to Smith et al., and 5,218,030 to Katayose et al. The curing catalyst for the unsaturated portion of the thermoset may include any compound capable of producing radicals at elevated temperatures. Such curing catalysts may include both peroxy and non-peroxy based radical initiators. Examples of useful peroxy initiators include, for example, benzoyl peroxide, dicumyl peroxide, methyl ethyl ketone peroxide, lauryl peroxide, cyclohexanone peroxide, t-butyl hydroperoxide, t-butyl benzene hydroperoxide, t-butyl peroctoate, 2,5-dimethylhexane-2,5-dihydroperoxide, 2,5-dimethyl-2,5-di(t-butylperoxy)-hex-3-yne, di-t-butylperoxide, t-butylcumyl peroxide, alpha,alpha'-bis(t-butylperoxy-m-isopropyl)benzene, 2,5-dimethyl-2,5-di(t-butylperoxy)hexane, dicumylperoxide, di(t-butylperoxy isophthalate, t-butylperoxybenzoate, 2,2-bis(t-butylperoxy)butane, 2,2-bis(t-butylperoxy)octane, 2,5-dimethyl-2,5-di(benzoylperoxy)hexane, di(trimethylsilyl)peroxide, trimethylsilylphenyltriphenylsilyl peroxide, and the like, and mixtures comprising at least one of the foregoing curing catalysts. Typical non-peroxy initiators include, for example, 2,3-dimethyl-2,3-diphenylbutane, 2,3-trimethylsilyloxy-2,3-diphenylbutane, and the like, and mixtures comprising at least one of the foregoing curing catalysts. The curing catalyst for the unsaturated portion of the thermoset may further include any compound capable of initiating anionic polymerization of the unsaturated components. Such anionic polymerization catalysts include, for example, alkali metal amides, such as sodium amide (NaNH₂) and lithium diethyl amide (LiN(C₂H₅)₂); alkali metal and ammonium salts of C₁-C₁₀ alkoxides; alkali metal and ammonium hydroxides; alkali metal cyanides; organometallic compounds such as the alkyl lithium compound n-butyl lithium and the grignard reagent phenyl magnesium bromide; and the like; and combinations comprising at least one of the foregoing anionic polymerization catalysts.

In a preferred embodiment, the curing catalyst may comprise t-butylperoxybenzoate or methyl ethyl ketone peroxide. The curing catalyst may promote curing at a temperature of about 0°C to about 200°C.

When present, the curing catalyst may be used in an amount of about 0.1 to about 10 parts by weight per 100 parts total of the functionalized poly(arylene ether), the alkenyl aromatic monomer, the acryloyl monomer, and the polymeric additive. Within this range, it may be preferred to use a curing catalyst amount of at least about 0.5 parts by weight, more preferably at least about 1 part by weight. Also within this range, it may be preferred to use a curing catalyst amount of up to about 5 parts by weight, more preferably up to about 3 parts by weight.

The composition may, optionally, further comprise a curing promoter to decrease the gel time. Suitable curing promoters include transition metal salts and complexes such as cobalt naphthanate; and organic bases such as N,N-dimethylaniline (DMA) and N,N-diethylaniline (DEA). Preferably, cobalt naphthanate and DMA are used in combination. When present, the promoter may be used in an amount of about 0.05 to about 3 parts, per 100 parts total of the functionalized poly(arylene ether), the alkenyl aromatic monomer, and the acryloyl monomer.

The composition may further comprise one or more fillers, including particulate fillers and fibrous fillers. Examples of such fillers well known to the art include those described in "Plastic Additives Handbook, 4^{th} Edition" R. Gachter and H. Muller (eds.), P.P. Klemchuck (assoc. ed.) Hansen Publishers, New York 1993. A particulate filler is herein defined as a filler having an average aspect ratio less than about 5:1. Non-limiting examples of fillers include silica powder, such as fused silica and crystalline silica; boron-nitride powder and boron-silicate powders for obtaining cured products having low dielectric constant and low dielectric loss tangent; the above-mentioned powder as well as alumina, and magnesium oxide (or magnesia) for high temperature conductivity; and fillers, such as wollastonite including surface-treated wollastonite, calcium sulfate (as its anhydride, dihydrate or trihydrate), calcium carbonate including chalk, limestone, marble and synthetic, precipitated calcium carbonates, generally in the form of a ground particulate which often comprises 98+% CaCO₃ with the remainder being other inorganics such as magnesium carbonate, iron oxide, and alumino-silicates; surface-treated calcium carbonates; talc, including fibrous, modular, needle shaped, and lamellar talc; glass spheres, both hollow and solid, and surface-treated glass spheres typically having coupling agents such as silane coupling agents and/or containing a conductive coating; and kaolin, including hard, soft, calcined kaolin, and kaolin comprising various coatings known to the art to facilitate the dispersion in and compatibility with the thermoset resin; mica, including metallized mica and mica surface treated with aminosilanes or acryloylsilanes coatings to impart good physicals to compounded blends; feldspar and nepheline syenite; silicate spheres; flue dust; cenospheres; fillite; aluminosilicate (armospheres), including silanized and metallized aluminosilicate; natural silica sand; quartz; quartzite; perlite; Tripoli; diatomaceous earth; synthetic silica, including those with various silane coatings, and the like.

Preferred particulate fillers include calcium carbonates having an average particle size of about 1 to about 10 micrometers. Within this range, the average particle size may be at least about 2 micrometers, or at least about 3 micrometers. Also within this range, the average particle size may be up to about 8 micrometers, or up to about 7 micrometers.

Fibrous fillers include short inorganic fibers, including processed mineral fibers such as those derived from blends comprising at least one of aluminum silicates, aluminum oxides, magnesium oxides, and calcium sulfate hemihydrate. Also included among fibrous fillers are single crystal fibers or "whiskers" including silicon carbide, alumina, boron carbide, carbon, iron, nickel, copper. Also included among fibrous fillers are glass fibers, including textile glass fibers such as E, A, C, ECR, R, S, D, and NE glasses and quartz.

Preferred fibrous fillers include glass fibers having a diameter of about 5 to about 25 micrometers and a length before compounding of about 0.5 to about 4 centimeters.

Many other suitable fillers are described in U.S. Published Application No. 2001/0053820 A1 to Yeager et al.

When present, the particulate filler may be used in an amount of about 5 to about 80 weight percent, based on the total weight of the composition. Within this range, it may be preferred to us a particulate filler amount of at least about 10 weight percent, more preferably at least about 20 weight percent, yet more preferably at least about 30 weight percent, still more preferably at least about 40 weight percent. Also within this range, it may be preferred to use a particulate filler amount of up to about 70 weight percent, more preferably up to about 60 weight percent.

When present, the fibrous filler may be used in an amount of about 2 to about 80 weight percent, based on the total weight of the composition. Within this range, it may be preferred to us a fibrous filler amount of at least about 5 weight percent, more preferably at least about 10 weight percent, yet more preferably at least about 15 weight percent. Also within this range, it may be preferred to use a fibrous filler amount of up to about 60 weight percent, more preferably up to about 40 weight percent, still more preferably up to about 30 weight percent.

These aforementioned fillers may be added to the thermosetting resin without any treatment, or after surface treatment, generally with an adhesion promoter.

The formulation may also contain adhesion promoters to improve adhesion of the thermosetting resin to the filler or to an external coating or substrate. Also possible is treatment of the aforementioned inorganic fillers with adhesion promoter to improve adhesion. Adhesion promoters include chromium complexes, silanes, titanates, zirco-aluminates, propylene maleic anhydride copolymers, reactive cellulose esters and the like. Chromium complexes include those sold by DuPont under the tradename

VOLAN®. Silanes include molecules having the general structure (RO)₍₄₋ₙ₎SiYₙ wherein n=1-3, R is an alkyl or aryl group and Y is a reactive functional group which can enable formation of a bond with a polymer molecule. Particularly useful examples of coupling agents are those having the structure (RO)₃SiY. Typical examples include vinyl-triethoxysilane, vinyl tris(2-methoxy)silane, γ-methacryloxypropyltrimethoxy silane, γ-aminopropyltriethoxysilane, γ-glycidoxypropyltrimethoxysilane, γ-mercaptopropyltrimethoxysilane. Titanates include those developed by S. J. Monte et al. in Ann. Chem. Tech Conf. SPI (1980), Ann. Tech Conf. Reinforced Plastics and Composite inst. SPI 1979, Section 16E, New Orleans; and S. J. Monte, Mod. Plastics Int. 14(1984) 6 pg. 2. Zirco-aluminates include those described by L.B. Cohen in Plastics Engineering 39 (1983) 11, pg. 29. The adhesion promoter may be included in the thermosetting resin itself, or coated onto any of the fillers described above to improve adhesion between the filler and the thermosetting resin. For example such promoters may be used to coat a silicate fiber or filler to improve adhesion of the resin matrix.

In a preferred embodiment, the filler comprises calcium carbonate. In another preferred embodiment, the filler comprises glass fibers. In a highly preferred embodiment, the filler comprises both calcium carbonate and glass fibers.

The composition may, optionally, further comprising an additive selected from flame retardants, mold release agents and other lubricants, antioxidants, thermal stabilizers, ultraviolet stabilizers, pigments, dyes, colorants, anti-static agents, conductive agents, curing promoters, and the like, and combinations comprising at least one of the foregoing additives. Selection of particular additives and their amounts may be performed by those skilled in the art.

The composition may be prepared by forming an intimate blend of the functionalized poly(arylene ether), the alkenyl aromatic monomer, the acryloyl monomer, and the polymeric additive. When the functionalized poly(arylene ether) is a capped poly(arylene ether), the composition may be prepared directly from an uncapped poly(arylene ether) by dissolving the uncapped poly(arylene ether) in a portion of the alkenyl aromatic monomer, adding a capping agent form the capped poly(arylene ether) in the presence of the alkenyl aromatic monomer, and adding the acryloyl monomer, the polymeric additive, and any other components to form the thermoset composition.

When a sol-gel is desired, the functionalized poly(arylene ether), the alkenyl aromatic monomer, the acryloyl monomer, and the polybutene are mixed together to form an intimate blend. The temperature of mixing to produce a sol-gel may be at least 40°C, preferably at least 60°C, and even more preferably at least 70°C. One of ordinary skill in the art can easily determine the time and the temperature of mixing required to form an intimate blend of the foregoing components. The blend is allowed to cool for a sufficient amount of time to form a sol-gel. Phase separation and sol-gel formation may occur by cooling the blend to a temperature below the sol-gel transition temperature at least about 1 hour, preferably at least about 5 hours, and more preferably at least about 10 hours. The rate of cooling must be sufficient to allow the phase separation (sol-gel formation) to occur. Increasing the rate of cooling may compromise phase separation and sol-gel formation.

There is no particular limitation on the method by which the composition may be cured. The composition may, for example, be cured thermally or by using irradiation techniques, including UV irradiation and electron beam irradiation. When heat curing is used, the temperature selected may be about 80° to about 300°C. Within this range, a temperature of at least about 120°C may be preferred. Also within this range, a temperature up to about 240°C may be preferred. The heating period may be about 30 seconds to about 24 hours. Within this range, it may be preferred to use a heating time of at least about 1 minute, more preferably at least about 2 minutes. Also within this range, it may be preferred to use a heating time up to about 10 hours, more preferably about 5 hours, yet more preferably up to about 3 hours. Such curing may be staged to produce a partially cured and often tack-free resin, which then is fully cured by heating for longer periods or temperatures within the aforementioned ranges.

The composition exhibits highly desirable properties. For example in some embodiments the composition after molding may exhibit a shrinkage at least 10% less than the shrinkage exhibited by a corresponding composition without the polymeric additive. Shrinkage is determined by comparing a dimension of a molded part with the corresponding dimension of the mold. This comparison is performed at room temperature about 24 hours after the sample is molded. The shrinkage is preferably at least 20% less, more preferably at least 30% less, still more preferably at least 40% less, even more preferably at least 50% less than that of the no-additive comparison.

The composition after molding in a Class A surface mold preferably exhibits an orange peel value less than 40, more preferably less than 35, still more preferably less than 30, yet more preferably less than 25, even more preferably less than 20. These measurements are made using a commercial technique called D-Sight in which incandescent light is reflected off the surface of a part. Surface roughness or waviness is seen as light and dark variations in reflected light intensity and are correlated with a numerical assessment of performance using software algorithms. For these measurements, the D-Sight camera and light source are set at angle of 23 degrees below horizontal and the part placed at a distance of 50 inches from the base of the cameral/light source. The part itself is set at an angle of 10 degrees above horizontal facing the inspection system. Measurements are made on parts with gloss surfaces obtained by either painting the part with gloss black paint or wiping the surface with highlighting oil. For measurements, the light level reading is kept between 90 and 110.

The composition after molding in a Class A surface mold preferably exhibits a waviness less than 300, more preferably less than 200, still more preferably less than 150, yet more preferably less than 120.

In one embodiment, the curable composition comprises: about 10 to about 90 parts by weight functionalized poly(arylene ether); about 10 to about 90 parts by weight alkenyl aromatic monomer; about 1.0 to about 50 parts by weight acryloyl monomer; and about 0.1 to about 30 parts by weight polybutene based on 100 parts by weight total of the functionalized poly(arylene ether), the alkenyl aromatic monomer, the acryloyl monomer, and the polybutene, wherein the polybutene has a number average molecular weight of greater than or equal to about 300 atomic mass units.

Another embodiment is a curable composition comprising 10 to about 90 parts by weight functionalized poly(arylene ether); about 10 to about 90 parts by weight alkenyl aromatic monomer; about 1.0 to about 50 parts by weight acryloyl monomer; and about 0.1 to about 30 parts by weight polybutene based on 100 parts by weight total of the functionalized poly(arylene ether), the alkenyl aromatic monomer, the acryloyl monomer, and the polybutene, wherein the polybutene has a number average molecular weight of greater than or equal to about 300 atomic mass units, and further comprising about 2.0 to about 80 weight percent of glass filler based on the total weight of the composition.

Another embodiment is a method of forming a curable composition, comprising: blending a functionalized poly(arylene ether); an alkenyl aromatic monomer; an acryloyl monomer; and a polybutene; wherein the polybutene has a number average molecular weight of greater than or equal to about 300 atomic mass units.

Other embodiments include the reaction product obtained by curing any of the above curable compositions.

Still other embodiments include articles comprising any of the cured compositions. Articles that may be fabricated from the composition include, for example, acid bath containers, neutralization tanks, electrorefining tanks, water softener tanks, fuel tanks, filament-wound tanks, filament-wound tank linings, electrolytic cells, exhaust stacks, scrubbers, automotive exterior panels, automotive floor pans, automotive air scoops, truck bed liners, drive shafts, drive shaft couplings, tractor parts, transverse leaf springs, crankcase heaters, heat shields, railroad tank cars, hopper car covers, boat hulls, submarine hulls, boat decks, marine terminal fenders, aircraft components, propeller blades, missile components, rocket motor cases, wing sections, sucker rods, fuselage sections, wing skins, wing flairings, engine narcelles, cargo doors, aircraft stretch block and hammer forms, bridge beams, bridge deckings, stair cases, railings, walkways, pipes, ducts, fan housings, tiles, building panels, scrubbing towers, flooring, expansion joints for bridges, injectable mortars for patch and repair of cracks in structural concrete, grouting for tile, machinery rails, metal dowels, bolts, posts, electrical eucapsulants, electrical panels, printed circuit boards, electrical components, wire windings, seals for electromechanical devices, battery cases, resistors, fuses, thermal cut-off devices, coatings for printed wiring boards, capacitors, transformers, electrically conductive components for antistatic applications, tennis racquets, golf club shafts, fishing rods, skis, ski poles, bicycle parts, swimming pools, swimming pool slides, hot tubs, saunas, mixers, business machine housings, trays, dishwasher parts, refrigerator parts, furniture, garage doors, gratings, protective body gear, luggage, optical waveguides, radomes, satellite dishes, signs, solar energy panels, telephone switchgear housings, transformer covers, insulation for rotating machines, commutators, core insulation, dry toner resins, bonding jigs, inspection fixtures, industrial metal forming dies, vacuum molding tools, and the like.

The composition is particularly useful for fabricating automotive components such as, for example, automotive body panels.

The invention is further illustrated by the following non-limiting examples, in which examples 1-92 are comparative and examples 93-97 illustrate the invention

### EXAMPLES 1-7, COMPARATIVE EXAMPLE 1

Seven examples and one comparative example were prepared to demonstrate the effect of poly(vinyl ether) additives on shrinkage. The poly(arylene ether) was a methacrylate-capped poly(2,6-dimethyl-1,4-phenylene ether) ("PPO-MAA") having an intrinsic viscosity of 0.12 deciliters per gram at 25°C in chloroform. It was prepared as described in Example 1 of International Patent Application WO 01/40354 A1. The crosslinker in all examples was trimethylolpropane trimethacrylate ("TMPTMA"), obtained from Sartomer. Styrene and t-butylperoxybenzoate were obtained from Aldrich Chemical Company. Calcium carbonate was obtained from Omya Corporation as OMYACARB® 5. Glass fibers were obtained as chopped one-half inch fibers from Owens Corning Fiberglass Corporation.

An ethanol solution of a poly(ethyl vinyl ether) having a number average molecular weight (Mₙ) of approximately 22,000 atomic mass units (AMU) was obtained from Scientific Polymer Products. An ethanol solution of a poly(ethyl vinyl ether) having a number average molecular weight (Mₙ) of approximately 1,000 AMU was obtained from Scientific Polymer Products. An ethanol solution of a poly(isobutyl vinyl ether) having a number average molecular weight (Mₙ) of approximately 15,000 AMU was obtained from Scientific Polymer Products. Each poly(vinyl ether) solution was reduced to a neat poly(vinyl ether) resin by rotary evaporation. The poly(vinyl ether) sample was weighed and dissolved in an equal weight of styrene. The resulting 50% poly(vinyl ether)/styrene solution was combined with a 42.5 weight percent solution of PPO-MAA in styrene and trimethylolpropane trimethacrylate in the amounts (expressed in parts by weight, "pbw") shown in Table 1, below. The solution became fluid and apparently homogeneous after heating to approximately 50 to 70°C. Zinc stearate and calcium carbonate (CaCO₃) were then added and the mixture was stirred vigorously to form a pasty mixture. The t-butylperoxybenzoate was added and the bulk molding compound was formed by blending the pasty mixture with one-half inch glass fibers in a mixing bowl. The compositions were molded at 150°C and 1,200 psi and the shrinkage was measured by comparison of the width of the sample to that of a the mold.

As shown, the shrinkage of blends containing poly(ethyl vinyl ether) and/or poly(isobutyl vinyl ether) (Exs. 1-7) was significantly lower than the control (C. Ex. 1), demonstrating the utility of poly(vinyl ether)s in reducing shrinkage of thermoset compositions comprising poly(arylene ether) resins. Example 4, with poly(isobutyl vinyl ether) exhibited slight expansion (negative shrinkage) of the molded part.

**Table 1**

| | Ex. 1 | Ex. 2 | Ex. 3 | C. Ex.1 | Ex. 4 | Ex. 5 | Ex. 6 | Ex. 7 |
|---|---|---|---|---|---|---|---|---|
| PPO-MAA/Styrene (42.5% wt./wt.) Solution (pbw) | 85 | 85 | 85 | 85 | 85 | 85 | 85 | 85 |
| Trimethylolpropane Trimethacrylate (pbw) | 20 | 20 | 20 | 20 | 20 | 20 | 20 | 20 |
| Poly(ethyl vinyl ether), Mₙ=22,000 (pbw) | 0 | 20 | 30 | 0 | 0 | 20 | 30 | 10 |
| Poly(ethyl vinyl ether), Mₙ=1,000 (pbw) | 0 | 0 | 0 | 0 | 0 | 0 | 0 | 10 |
| Poly(isobutyl vinyl ether), Mₙ=15,200 (pbw) | 0 | 0 | 0 | 0 | 20 | 0 | 0 | 0 |
| Styrene (pbw) | 0 | 0 | 0 | 0 | 10 | 10 | 10 | 10 |
| t-Butylperoxybenzoate (pbw) | 2 | 2 | 0 | 2 | 2 | 2 | 0 | 2 |
| Zinc Stearate (pbw) | 3 | 3 | 0 | 3 | 3 | 3 | 0 | 3 |
| Calcium Carbonate (6 micron) (pbw) | 240 | 240 | 260 | 240 | 240 | 240 | 0 | 260 |
| 1/2" Glass Fiber (pbw) | 90 | 90 | 97.5 | 90 | 90 | 90 | 0 | 97.5 |
| Shrinkage (%) | 0.183 | 0.047 | 0.014 | 0.183 | -0.009 | 0.057 | 0.005 | 0.06 |

### EXAMPLES 8-24, COMPARATIVE EXAMPLES 2 AND 3

Twenty-five examples and two comparative examples were prepared, varying primarily in the type and amount of polymeric additive. Compositions and properties are summarized in Table 2.

Two poly(arylene ether) types were used. The poly(arylene ether) designated "50/50 - 0.12 IV PPO-MAA/Styrene" in Table 2 was a 50 weight percent solution in styrene of a methacrylate-capped poly(2,6-dimethyl-1,4-phenylene ether) having an intrinsic viscosity of 0.12 dL/g. The poly(arylene ether) designated "50/50 - 0.12 IV PPO-Psal/Styrene" was a 50 weight percent solution in styrene of a polysalicylate-capped poly(2,6-dimethyl-1,4-phenylene ether) having an intrinsic viscosity of 0.12 dL/g; this material was prepared using the procedure from Example 3 of U.S. Patent No. 4,760,118 to White et al.

Several polymeric additives were employed. The additive designated "CTB X162 Hycar" in Table 2 was a carboxy-terminated butadiene homopolymer having a carboxyl content acid number of 25, a solubility parameter (based on molar attraction constants) of 8.14, a number average molecular weight of 4,200 AMU, and a glass transition temperature of -7.7°C, obtained as HYCAR® 2000X162 CTB from Noveon Solutions. "CTBN 1300X31 Hycar" was a carboxy-terminated butadiene (90%) / acrylonitrile (10%) copolymer having a carboxyl content acid number of 28, a solubility parameter of 8.14, a number average molecular weight of 3,800 AMU, and a glass transition temperature of -66°C, obtained as HYCAR® 1300X31 CTBN from Noveon Solutions. "VTBNX 1300X33 Hycar" was a methacrylate vinyl butadiene (82%) / acrylonitrile (18%) copolymer having an acid number less than 5, a solubility parameter of 8.9, a number average molecular weight of 3,600 AMU, and a glass transition temperature of -49°C, obtained as HYCAR® 1300X33 VTBNX from Noveon Solutions. "PMMA N700 AOC" was a poly(methyl methacrylate) homopolymer provided as a 32 weight percent solution in styrene, obtained as N700 from AOC Resins. "PS N715 AOC" was a polystyrene homopolymer provided as a 32 weight percent solution in styrene, obtained as N715 from AOC Resins. "PVac LP40A UC" was a poly(vinyl acetate) copolymer provided as a 40 weight percent solution in styrene, obtained as LP40A from Union Carbide (this product is currently sold by Dow Chemical). "PVac LP90 UC" was a poly(vinyl acetate) copolymer provided as a 40 weight percent solution in styrene, obtained as LP90 from Union Carbide (now Dow). "PVac NeulonT UC" was a poly(vinyl acetate) copolymer provided as a 40 weight percent solution in styrene, obtained as NEULON® T from Union Carbide (now Dow). "SB Copoly XV-2314 AOC" was a styrene-butadiene copolymer provided as a 35 weight percent solution in styrene, obtained as XV-2314 from AOC Resins.

The crosslinker in all examples was trimethylolpropane triacrylate (TMPTA).

An organic peroxide initiator was obtained as LUPEROX® P from Atofina and used at 2 parts per hundred resin in all samples.

A calcium carbonate having an average particle size of 5 micrometers was obtained from Omya Corporation and used at 56 weight percent in all samples. Glass fibers having a length of 13 millimeters and a diameter of 17 micrometers were obtained as OCF-163D-17C from Owens Coming Fiber and used at 20 weight percent in all samples.

For each sample, the resin components were mixed thoroughly at about 60 to 70°C using a Cowles impellor to form a paste. After adding initiator and inorganic fillers, glass fibers were compounded into the paste using a low shear Hobart dough mixer. Molding utilized a glass-A mold manufactured by Heyden Mold & Bench of Tailmadge, Ohio. For each composition, four plaques (approximately 650 g, 1/8 inch thick by 12 inch square) were made by compression molding at 1200 pounds per square inch (psi) for 2 minutes.

Part warp was measured as the maximum vertical deflection of a given corner with the plaque resting on a flat reference surface.

For shrinkage evaluation, the part was clamped to a flat surface and plaque diagonals were measured. Shrinkage was calculated relative to the size of the compression mold cavity.

Orange peel and waviness were measured with an LMI Technologies D-Sight analyzer. These are non-contact measurements in which reflected light is captured by a video system and analyzed. The technique can be used to analyze short-wave deviations (microns to about 1 centimeter; "orange peel") and long-wave deviations (about 1 centimeter to as large as the dimension of the sampled area; "waviness") from a perfectly flat surface. For a given data set, all measurements were made during the same measurement session. Lower values of orange peel and roughness are more desirable. Although there is not currently a standard definition of Class A Surface, it is generally considered to include an orange peel value less than or equal to about 20 and a waviness value less than or equal to 120.

Cured phase behavior was determined as follows. All resin chemistries were separately formulated in the lab without inorganic filler or glass reinforcement. Drops of the resins without initiator were placed in the polished well of a glass slide, covered, and inspected under a microscope equipped with a METTLER® hot stage. Visual inspection was used to assess miscibility, first at 150°C and then again after cooling to 25°C. In separate samples, initiator was added to the neat resins and they were molded into 3 mm thick plaques between two sheets of polished metal plate using a Micromet Instruments Minipress (MP-2000). Assessments of uncured resin miscibility are denoted as "+" for miscible, "-" for immiscible. Cured resin phase behavior are denoted as "S" for single phase, "M" for multiphase. These assessments are based on the presence or absence of discemable heterogeneities that, in uncured resins, are large enough to be observed under an optical microscope, or, in cured samples, are large enough to scatter significant visible light and render samples translucent or opaque.

The results in Table 2 show that Examples 8-24 with styrene-butadiene copolymer, polystyrene, poly(methyl methacrylate), poly(vinyl acetate), carboxy-terminated polybutadiene, or carboxy-terminated poly(butadiene-*co*-acrylonitrile), exhibited reduced shrinkage compared to their respective controls (Comparative Example 2 and 3). Waviness was also reduced in most cases.

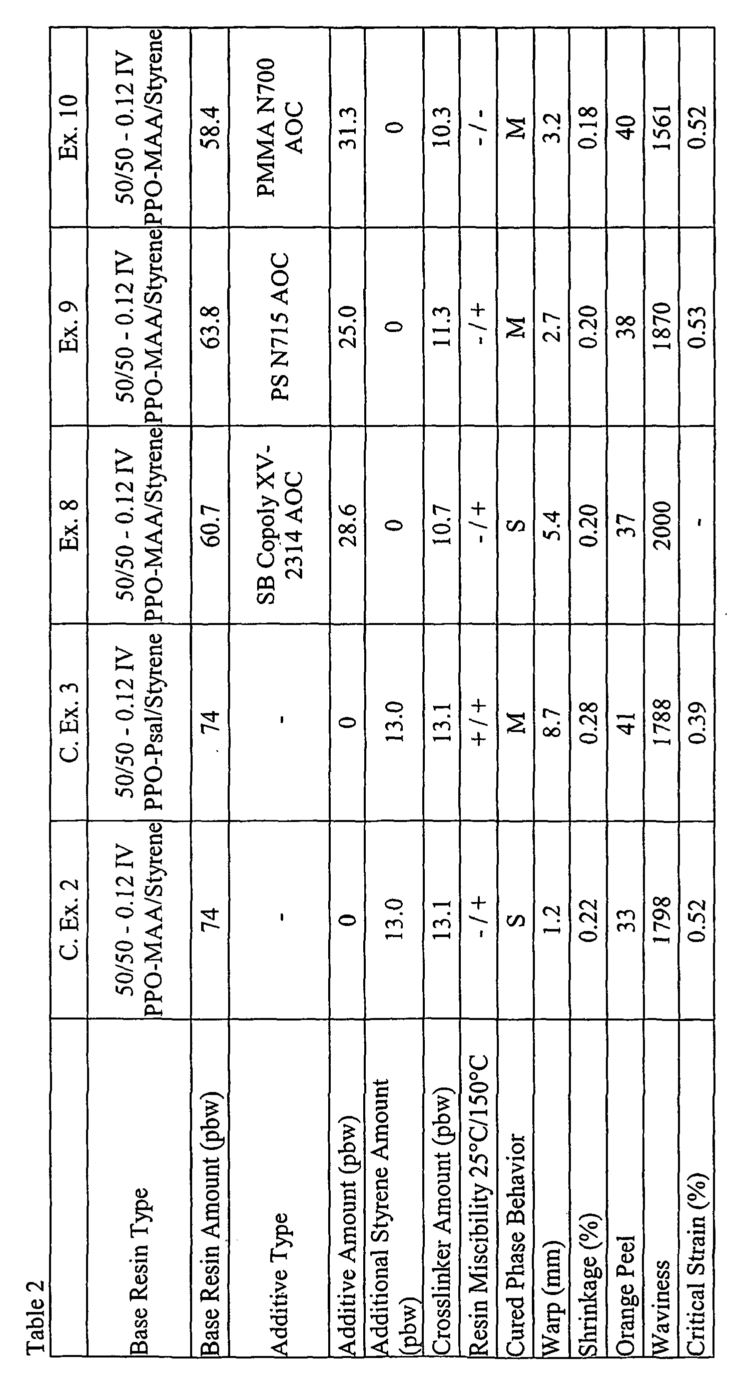

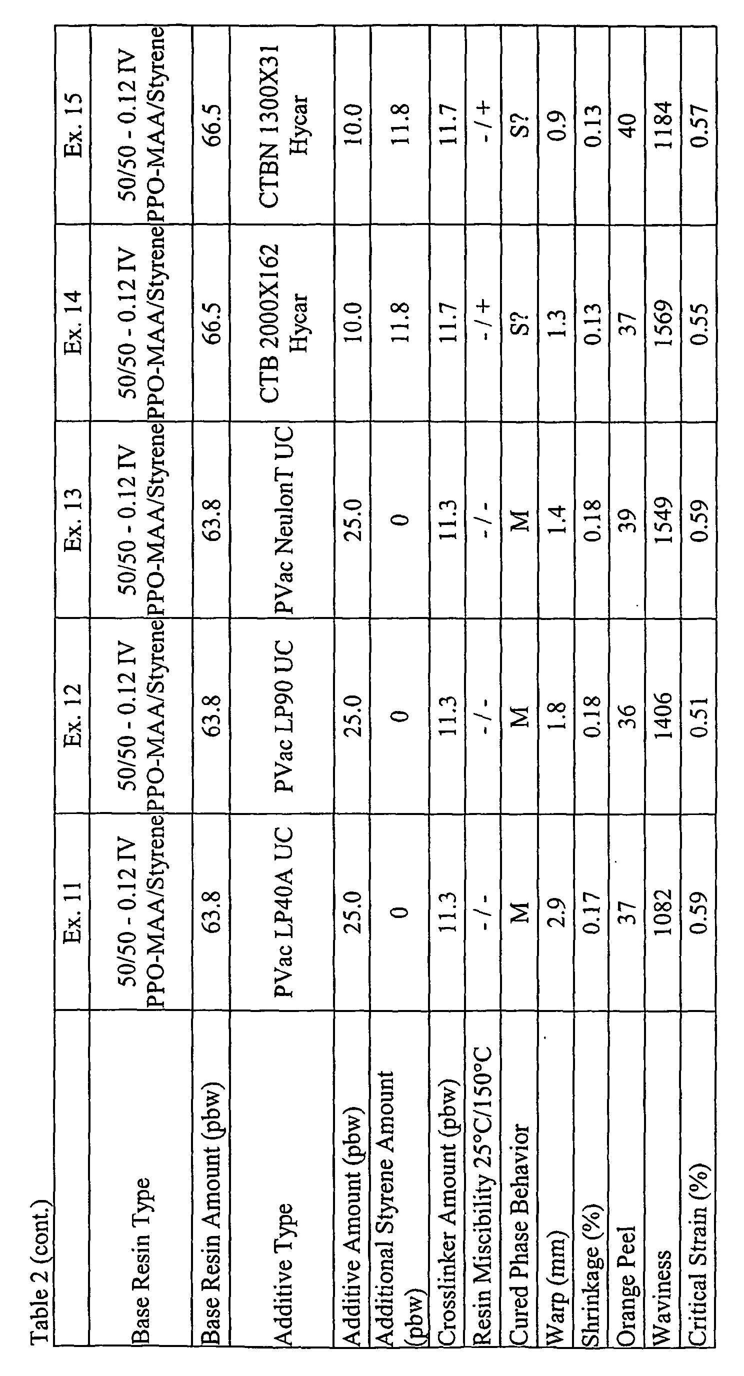

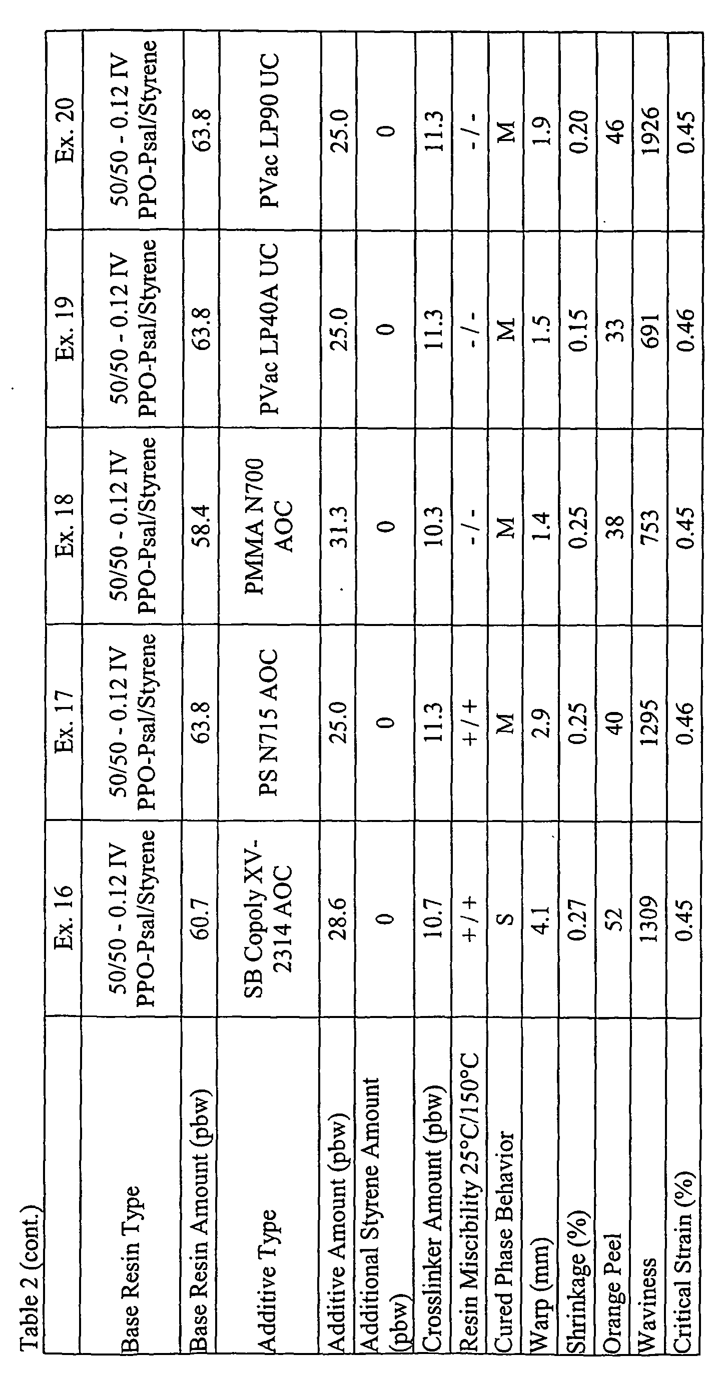

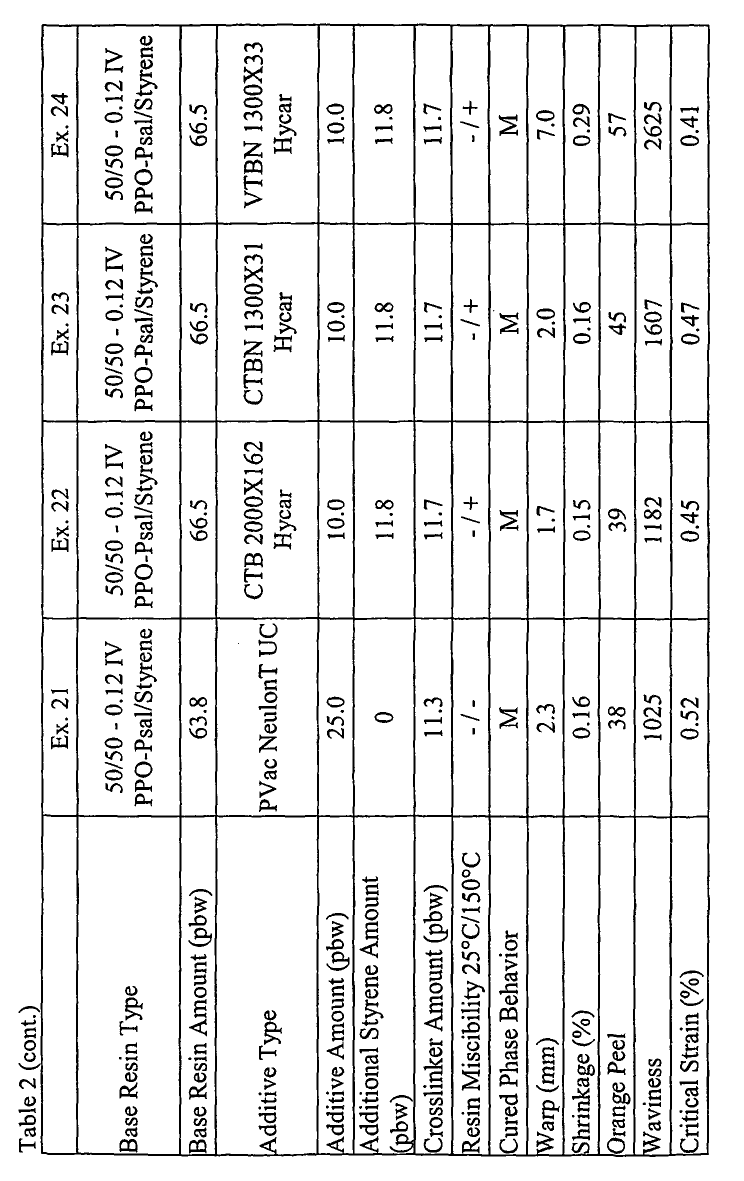

### EXAMPLES 25-30

Six samples were prepared varying in crosslinker amount, and polymeric additive and amount. The base resin for all samples was a 50 weight percent solution in styrene of a methacrylate-capped poly(2,6-dimethyl-1,4-phenylene ether) having an intrinsic viscosity of 0.12 dL/g.

The crosslinker was trimethylolpropane triacrylate (TMPTA) or trimethylolpropane trimethacrylate (TMPTMA). The initiator was t-butyl peroxy-2-ethylhexanoate, obtained as LUPEROX® 26 from Atofina Chemicals.

Three different polymeric additives were used. The additive designated "PEB Kraton L1203" in Table 3 was a monohydroxy-terminated poly(ethylene-butylene) having a hydroxyl equivalent molecular weight of 4,200 AMU, an approximate hydroxyl functionality of 0.9, and a specific gravity of 0.88 g/cc, obtained as KRATON® L1203 from Kraton Polymers. "PB Lithene N4-9000" was a liquid polybutadiene having a number average molecular weight of 9,000, 10-20% 1,2 vinyl microstructure, 50-60% trans-1,4 and 25-35% cis-1,4 structure, obtained as N4-9000 from Revertex Chemicals Limited (Hartlepool, UK). "CTB Hycar 2000X162" was a carboxy-terminated butadiene homopolymer having a carboxyl content acid number of 25, a solubility parameter (based on molar attraction constants) of 8.14, a number average molecular weight of 4,200 AMU, and a glass transition temperature of -77°C, obtained as HYCAR® 2000X162 CTB from Noveon Solutions.

Each sample was prepared as a 3 kilogram batch containing 25 weight percent resin, 54 weight percent calcium carbonate, 20 weight percent glass fibers, and 1 weight percent of the mold release agent zinc stearate. Components amount in Table 3 are expressed in grams and reflect contributions to a 3 kg batch.

Samples molded at 120°C and 1,200 psi for 2 minutes. Orange peel was measured as described above. Compositions and properties are summarized in Table 3. The results show reduced orange peel values relative to control samples represented by Control Examples 4 and 5, below.

**Table 3**

| | Ex. 25 | Ex. 26 | Ex. 27 | Ex. 28 | Ex. 29 | Ex. 30 |
|---|---|---|---|---|---|---|
| Base Resin Amount (pbw) | 612 | 576 | 574 | 540 | 574 | 540 |
| Crosslinker Type | TMPTA | TMPTMA | TMPTA | TMPTMA | TMPTA | TMPTMA |
| Crosslinker Amount (pbw) | 108 | 144 | 101 | 135 | 101 | 135 |
| Additive Type | PEB Kraton L1203 | PEB Kraton L1203 | PB Lithene N4-9000 | PB Lithene N4-9000 | CTB Hycar X162 | CTB Hycar X162 |
| Additive Amount (pbw) | 30 | 30 | 75 | 75 | 75 | 75 |
| Initiator Amount (pbw) | 15 | 15 | 15 | 15 | 15 | 15 |
| Mold Release Amount (pbw) | 30 | 30 | 30 | 30 | 30 | 30 |
| Carbonate Amount (pbw) | 1620 | 1620 | 1620 | 1620 | 1620 | 1620 |
| Glass Fiber Amount (pbw) | 600 | 600 | 600 | 600 | 600 | 600 |
| Orange Peel | 24.2 | 24.0 | 31.9 | 28.4 | 31.8 | 34.4 |

### EXAMPLES 31-36, COMPARATIVE EXAMPLE 4

Nine compositions were prepared, varying in the amount of polybutadiene and poly(ethylene-butylene) additives. The base resin for all samples was a 50 weight percent solution in styrene of a methacrylate-capped poly(2,6-dimethyl-1,4-phenylene ether) having an intrinsic viscosity of 0.12 dL/g. The crosslinker for all samples was trimethylolpropane trimethacrylate. A polybutadiene having a number average molecular weight of 8,000, and a vinyl content of 28% was obtained as RICON® 134 from Sartomer. A monohydroxy-terminated poly(ethylene-butylene) copolymer having a hydroxyl equivalent weight of 4,200 and 0.9 hydroxyl functionality was obtained as KRATON® L1203 from Kraton Polymers. All samples were based on 25% total resin, 54% calcium carbonate, 1% zinc stearate, and 20% 13 millimeter glass fibers.

Molding was performed at 150°C and 1,200 psi. Shrinkage, orange peel, and waviness were measured for each sample.

The results, presented in Table 4, show that either polybutadiene or poly(ethylene-butene) alone reduces shrinkage and, in most cases, orange peel and waviness. The results further show that the combination of polybutadiene and poly(ethylenebutylene), each at 5 weight percent, is particularly effective to reduce shrinkage, orange peel, and waviness.

**Table 4**

| | C. Ex. 4 | Ex. 31 | Ex. 32 | Ex. 33 | Ex. 34 | Ex.35 | Ex. 36 |
|---|---|---|---|---|---|---|---|
| Base resin (pbw) | 80 | 80 | 80 | 80 | 80 | 80 | 80 |
| Trimethylolpropane trimethacrylate (pbw) | 20 | 20 | 20 | 20 | 20 | 20 | 20 |
| polybutadiene (pbw) | -- | 5 | 10 | -- | -- | 2.5 | 5.0 |
| poly(ethylene-butylene) (pbw) | -- | -- | -- | 2.5 | 5.0 | 2.5 | 5.0 |
| Shrinkage (%) | 0.24 | 0.23 | 0.17 | 0.17 | 0.14 | 0.17 | 0.13 |
| Orange Peel | 45 | 47 | 40 | 40 | 40 | 43 | 32 |
| Waviness | 1700 | 1800 | 1300 | 1500 | 910 | 1450 | 760 |

### EXAMPLE 37, COMPARATIVE EXAMPLE 5

Two samples were prepared with and without 10 weight percent of a 50:50 weight/weight mixture of polybutadiene and poly(ethylene-butylene). Components were the same as those described above for Examples 38-43.

Molding was performed at 150°C and 1,200 psi. Shrinkage, orange peel, and waviness values represent averages for two samples.

Compositions and properties are presented in Table 5. The results show that the combination of polybutadiene and poly(ethylene-butylene) is particularly effective at reducing shrinkage (to the point of causing slight expansion in Ex. 44), orange peel, and waviness.

**Table 5**

| | C. Ex. 5 | Ex. 37 |
|---|---|---|
| 50/50 0.12 IV PPO-MAA/styrene (pbw) | 80 | 80 |
| Trimethylolpropane trimethacrylate (pbw) | 20 | 20 |
| Polybutadiene (pbw) | -- | 5 |
| Poly(ethylene-butylene) (pbw) | -- | 5 |
| Shrinkage (%) | 0.095 | -0.016 |
| Orange Peel | 45 | 26 to 35 |
| Waviness | 1670 | 135 to 330 |

### EXAMPLES 38-55

Eighteen samples were prepared varying in the type and amount of crosslinker, the type and amount of polymeric additive, the type and amount of initiator, and the molding temperature.

The base resin for all examples was a methacrylate-capped poly(2,6-dimethyl-1,4-phenylene ether) having an intrinsic viscosity of 0.12 dL/g. It was used in the form of a 50 weight percent solution in styrene. The initiator t-butyl peroxy-2-ethylhexanoate was obtained as LUPEROX® 26 from Atofina Chemicals. The initiator t-butyl perbenzoate was obtained as LUPEROX® P from Atofina Chemicals. The crosslinker was either trimethylolpropane triacrylate (TMPTA) or trimethylolpropane trimethacrylate (TMPTMA).

Five different polymeric additives were employed. A dihydroxy-terminated poly(ethylene-butylene) having a weight average molecular weight of 1,700 AMU was obtained as KRATON® L2203 from Kraton Polymers. A monohydroxy-terminated poly(ethylene-butylene) having a weight average molecular weight of 4,200 AMU was obtained as KRATON® L1203 from Kraton Polymers. A polybutadiene having a number average molecular weight of 5,000 AMU and 10-20% vinyl content was obtained as Lithene N4-5000 from Revertex Chemicals Limited, Hartlepool, UK. An ethylene-propylene-dicyclopentadiene terpolymer having an ethylene:propylene weight ratio of 48/52, 9.5 weight percent diene, a viscosity average molecular weight of 7,000 AMU, and a weight average molecular weight of 40,000 AMU was obtained as TRILENE® 65 from Uniroyal Chemical. An ethylene-propylene-ethylidene norbomene terpolymer having an ethylene:propylene weight ratio of 45/55, 9.5% diene by weight, a viscosity average molecular weight of 7,500 AMU and a weight average molecular weight of 40,000 AMU was obtained as TRILENE® 67 from Uniroyal Chemical.

All amounts in Table 6 below are grams per 3 kilogram batch. All samples contained 25 weight percent resin, 54 weight percent calcium carbonate, 20 weight percent glass fibers (OCF 163D-17C from Owens Coming), and 1 weight percent zinc stearate. The following are the same for all samples: initiator amount = 15 g; zinc strearate amount = 30 g; calcium carbonate amount = 1620 g; molding time = 2 minutes; molding pressure = 1,200 psi.

The results, presented in Table 6, show reduced orange peel and waviness for the samples containing polymeric additives versus samples without them (see Comparative Examples 4 and 5, above).

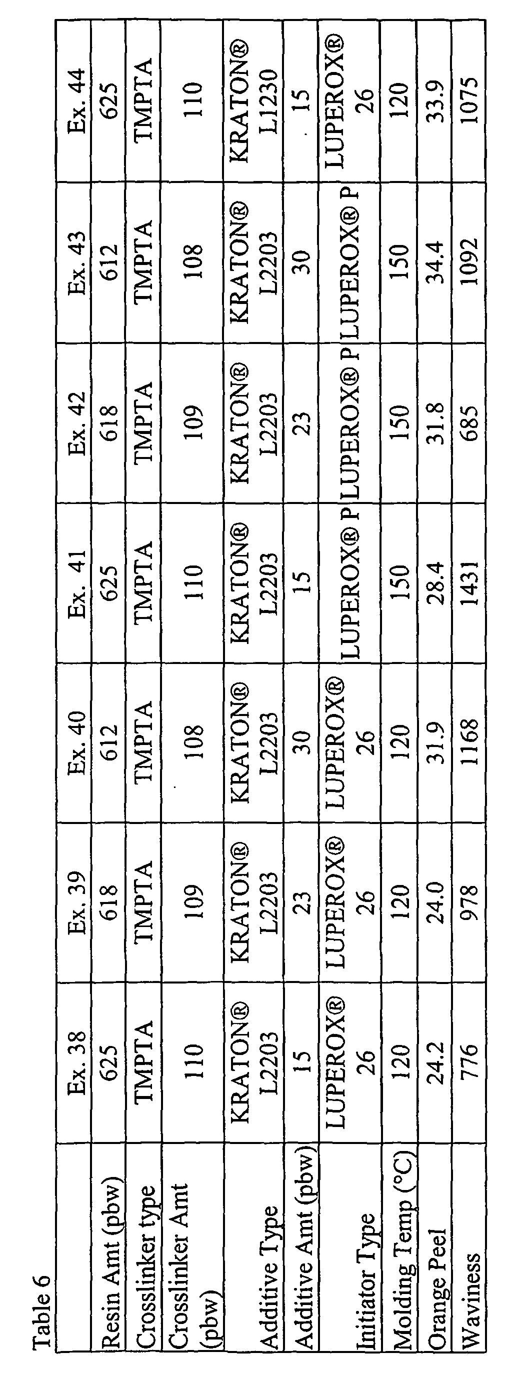

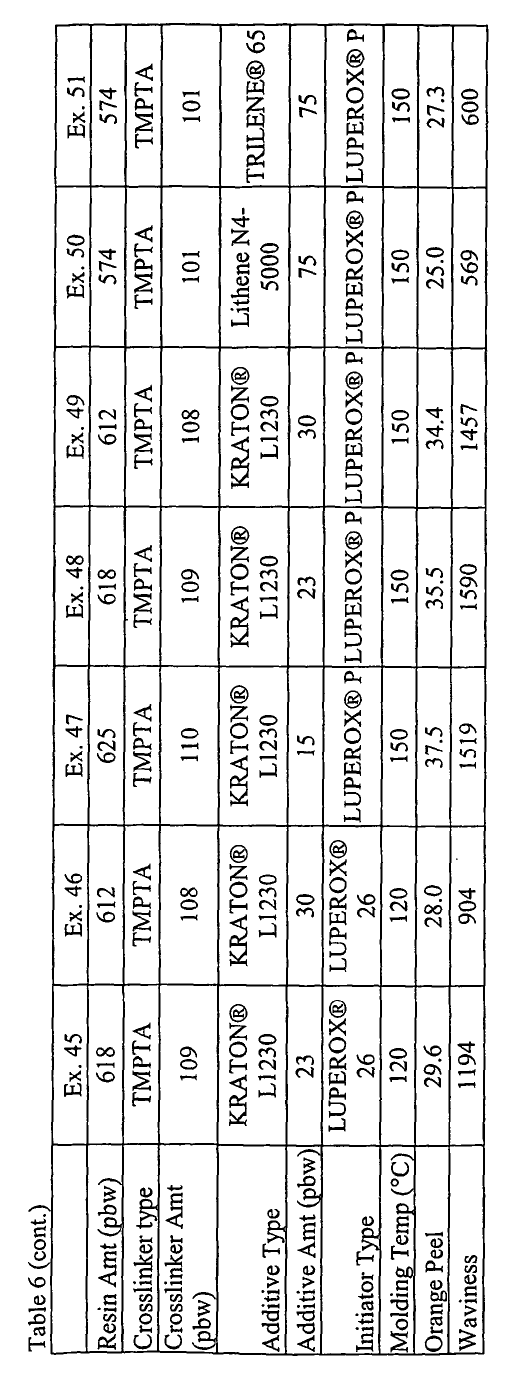

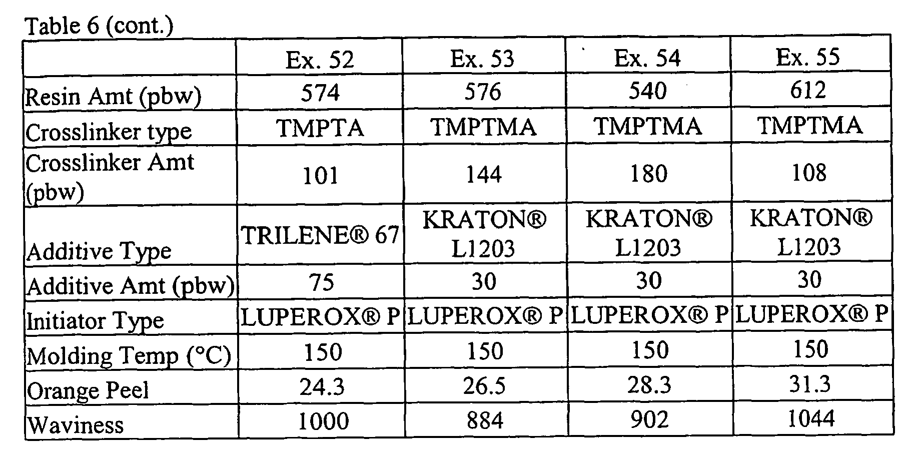

### EXAMPLES 56-64, COMPARATIVE EXAMPLE 6

Ten samples were prepared varying in the type and amount of crosslinker, the type and amount of polymeric additive, the type and amount of initiator, and the molding temperature. The base resin for all samples was a methacrylate-capped poly(2,6-dimethyl-1,4-phenylene ether) having an intrinsic viscosity of 0.12 dL/g, which was used as a 50 weight percent solution in styrene.

Initiators and polymeric additives are described above, except for RICON® 134, which is a polybutadiene having a number average molecular weight of 8,000 AMU and 28% vinyl content, obtained from Sartomer.

All formulations were prepared on a 1.5 kilogram scale, consisting of 25 weight percent resin, 54 weight percent calcium carbonate, 20 weight percent glass fibers, and a 1 weight percent zinc stearate. Component amounts in Table 7 are in grams per 1.5 kilogram batch. The follow are constants in these samples: initiator amount = 7.5 g, zinc stearate amount = 15 g; calcium carbonate amount = 810 g; glass fiber amount = 300 g; molding time = 2 minutes; molding pressure = 1,200 psi.

The results, presented in Table 7, show that the carboxy-terminated butadiene was effective at improving surface quality when molded at lower temp (120°C vs. 150°C) - the improvement is significant relative to a control (C. Ex. 6). The CTB appeared to be more highly phase separated at the lower temp enabling low profile additive morphology and performance. Both polybutadiene (RICON® 134) and PEB (KRATON® L1203) by themselves offered improvements relative to control (C. Ex. 6), but there was a synergistic improvement over either alone when these two were combined.

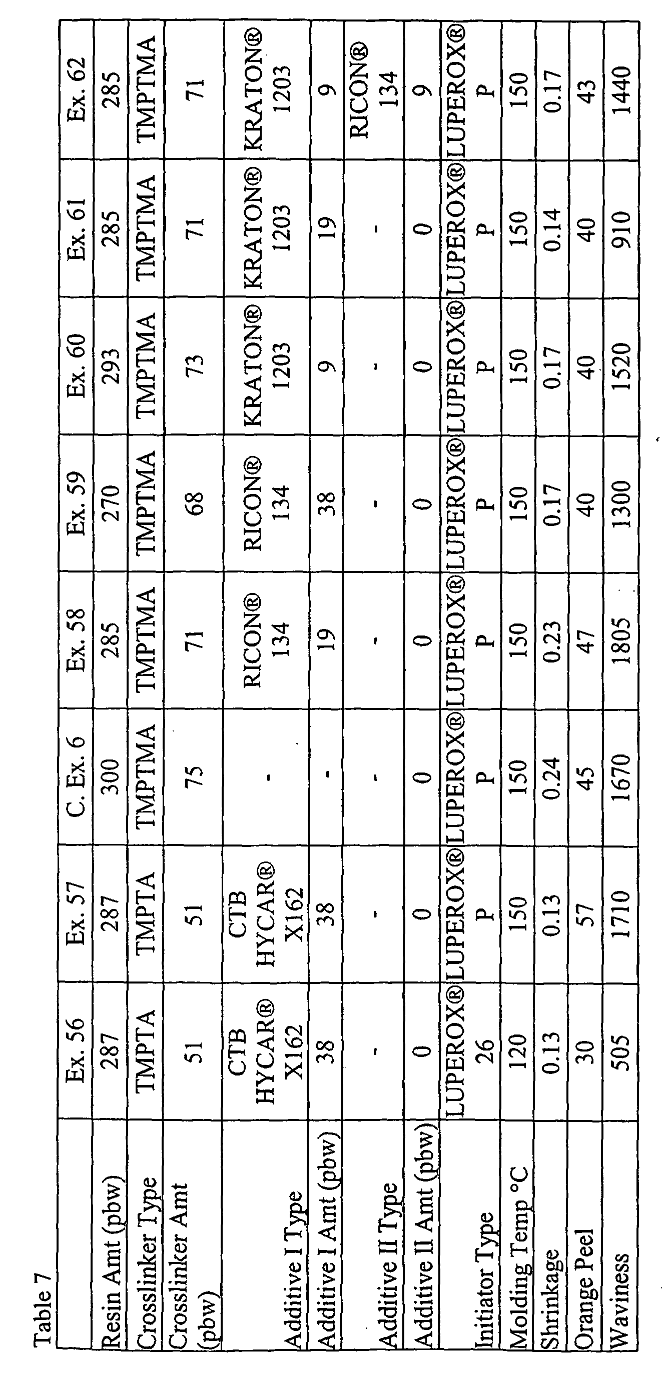

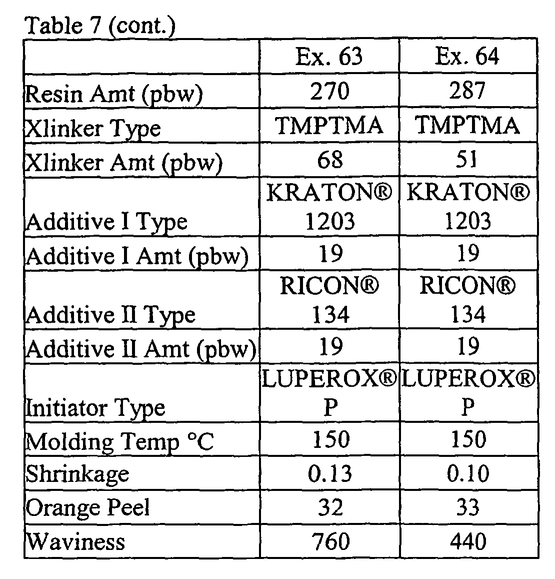

### EXAMPLES 65-72, COMPARATIVE EXAMPLE 7

These experiments show that the polymeric additives are also effective for reducing the painting defect known as "paint popping". Four compositions were prepared varying in base resin intrinsic viscosity, polymeric additive type, and polymeric additive amount. The base resins were a methacrylate-capped poly(2,6-dimethyl-1,4-phenylene ether) resins having an intrinsic viscosities of 0.12, and an acrylate-capped poly(2,6-dimethyl-1,4-phenylene ether) resins having an intrinsic viscosities of 0.30 dL/g. The polymeric additives were a carboxy-terminated polybutadiene ("CTB") obtained as HYCAR® 2000X162 CTB from Noveon Solutions, and a 32 weight percent solution of polystyrene ("PS") in styrene obtained as N715 from AOC Resins. All formulations consisted of 25 weight percent resin, 54 weight percent calcium carbonate, 20 weight percent glass fibers, and 1 weight percent zinc stearate. Initiator was added at 2 parts per 100 parts by weight of the base resin. t-Butyl perbenzoate, obtained as LUPEROX® P from Atofina Chemicals, was used for 150°C cures. t-Butyl peroxy-2-ethylhexanoate, obtained as LUPEROX® 26 from Atofina Chemicals, was used for 120°C cures. The formulated resins contained 15 weight percent of the crosslinker trimethylolpropane trimethacrylate. Component amounts are given in Table 8.

The two polymeric additives were separately blended with base resin, initiator, and crosslinker. To these mixtures, the calcium carbonate and glass were added along with the mold release agent. The resultant composite resins were divided into appropriate weight charges and each were compression molded into a 12x12 inch plaque at conditions of temperature and pressure known to result in complete cure of the thermoset. A total of three plaques were prepared for each composition. As a further control measure, the entire process was repeated on a second day, generating a second "replicate" set of three plaques for each composition.

Each of the molded plaques was subjected to an aggressive edge sanding protocol to produce rounded edges. Using an orbital sander, each edge was then sanded, using a circular motion, to obtain a rounded profile. Typically between 5 and 10 sanding passes at various angles were required to obtain a uniform rounded edge. After sanding, all samples were sent to an automotive painting company to be primed and painted under conditions identical to those experienced by automotive parts made from commercial thermoset composites. The priming/painting protocol followed the standard adopted by a consortium of automotive companies and their thermoset part suppliers (molding and priming companies.) All plaques were then returned for measurement of edge pop defects.

The plaques were clamped to a computer-controlled scanning sled that permitted the precise linear positioning of the plaque under a video camera. The scanning sled was programmed to travel 2 inches, pause for 2.5 seconds, and proceed to the next 2-inch segment of the plaque. The sled was programmed to perform this scan sequence 6 times in order to cover the entire 12-inch length of the plaque sides. The procedure was repeated 4 times in order to analyze all edges of the plaque.

Proper illumination orientation was critical in order to achieve sufficient contrast of the edge pops. A dual chromed gooseneck fiber optic light source was used to provide an angled source of light approximately 30° below the top of the plaque. Each gooseneck light source was positioned on either side of the plaque in order to minimize shadows and to illuminate edge pops on either side of the curved edge of the plaque side being analyzed.

The magnification was optimized in order to resolve the smallest typical observable edge pop (approximately 6 mils), permit a manageable number of areas for analysis from each side (6), and retain good contrast between the edge pops and the smooth painted surface. The scanning sled was positioned on a macro-stand that had a video camera with a 50mm macro lens attached. The video camera was interfaced to a PC-based image analysis system.

The image analysis system was coordinated with the computer-controlled scanning sled such that the image analyzer would automatically digitize the image and store it to the hard drive and repeat this process 6 times in order to store 6 images from each side of a plaque. A separate routine was written which first enhanced the contrast in the image of the edge and transformed the gray level image into a binary image by selecting the characteristic gray level range of the edge pops. Once the binary image was created, the image analysis program determined the edge pop defect size for every defect detected. A Microsoft EXCEL® macro was written to determine the average edge pop defect diameter, maximum diameter, and number density for each plaque edge.

Continuous data on the individual plaque edges (four twelve-inch edges per plaque) of each separate formulation were generated for the following measurements: paint pop number per area (counts per square centimeter of sanded edge), average paint pop diameter (millimeters), and maximum paint pop diameter (millimeters). The normality of the distributions of the paint pop number data allowed calculation of a pooled average for each formulation and its replicate. For each measurement type, the average and standard deviations are therefore based on 24 measurements, corresponding to 2 batches times 3 plaques/batch times 4 edges/plaque. For example, for a given formulation, Maximum Pop Diameter and its standard deviation are obtained by measuring the maximum pop diameter for each of the 24 total edges for that formulation, then calculating an average and standard deviation based on the population of 24 maximum pop diameters. Table 8 lists the statistics of the individual formulations.

These experiments demonstrate that the polymeric additives can reduce edge popping defects.

**Table 8**

| | | C. Ex. 7 | Ex. 65 | Ex. 66 | Ex. 67 |
|---|---|---|---|---|---|
| Base Resin Capping Group | | methacrylate | methacrylate | methacrylate | acrylate |
| Base Resin Intrinsic Viscosity (dL/g) | | 0.12 | 0.12 | 0.12 | 0.30 |
| Base Resin Amount (pbw) | | 626.6 | 576.5 | 501.4 | 501.4 |
| Crosslinker amount (pbw) | | 113.3 | 104.2 | 90.61 | 90.61 |
| Polymeric Additive Type | | (none) | CTB | PS | PS |
| Polymeric Additive Amount (pbw) | | 0 | 60.38 | 150.9 | 150.9 |
| Initiator Type | | LUPEROX® P | LUPEROX® 26 | LUPEROX® P | LUPEROX® P |
| Initiator Amount (pbw) | | 15.1 | 13.89 | 12.08 | 12.08 |
| Zinc Stearate Amount (pbw) | | 29.89 | 29.89 | 29.89 | 29.89 |
| Calcium Carbonate Amount (pbw) | | 1630.1 | 1630.1 | 1630.1 | 1630.1 |
| Glass Fiber Amount (pbw) | | 603.75 | 603.75 | 603.75 | 603.75 |
| Average Pop Number (counts/cm²) | | 3.16 | 1.74 | 1.53 | 1.41 |
| | standard deviation (counts/cm²) | 1.65 | 0.98 | 0.84 | 0.70 |
| Average Pop Diameter (mm) | | 0.48 | 0.36 | 0.47 | 0.35 |
| | standard deviation (mm) | 0.09 | 0.05 | 0.12 | 0.00 |
| Maximum Pop Diameter (mm) | | 1.33 | 0.72 | 1.05 | 0.68 |
| | standard deviation (mm) | 0.50 | 0.19 | 0.40 | 0.20 |

### EXAMPLE 73, COMPARATIVE EXAMPLE 8

Two compositions were prepared to illustrate the effect of a poly(vinyl ester) compound on shrinkage. The functionalized poly(arylene ether) was provided as a 35 weight percent solution in styrene of a methacrylate-capped poly(2,6-dimethyl-1,4-phenylene ether) having an intrinsic viscosity of 0.12 dL/g. A poly(vinyl laurate) having a number average molecular weight of 110,000 AMU was obtained from Scientific Polymer Products. Shrinkage was measured as described in Examples 1-7. Compositions and shrinkage values are provided in Table 9. Note that the ratios of resin to calcium carbonate and (resin + calcium carbonate) to glass fiber are the same for both samples. The results show that addition of the poly(vinyl ester) reduced the shrinkage of the composition.

**Table 9**

| | C. Ex. 8 | Ex. 73 |
|---|---|---|
| COMPOSITION | | |
| PPO-MAA/styrene solution (pbw) | 85 | 85 |
| Trimethylolpropane trimethacrylate (pbw) | 20 | 20 |
| Poly(vinyl laurate) (pbw) | 0 | 20 |
| Zinc Stearate (pbw) | 3 | 3 |
| t-Butylperoxybenzoate (pbw) | 2 | 2 |
| Calcium carbonate (pbw) | 220 | 240 |
| Glass fiber (pbw) | 83 | 85 |
| PROPERTIES | | |
| Shrinkage (%) | 0.18 | 0.011 |

### EXAMPLES 74 TO 79

Six compositions varying in poly(vinyl ester) type were prepared. Each sample contained 80 parts by weight of at 35% solution in styrene of methacrylate-capped poly(2,6-dimethyl-1,4-phenylene ether) having an intrinsic viscosity of 0.12 dL/g, 20 parts by weight of trimethylolpropane trimethacrylate, 10 parts by weight of the poly(vinyl alkanoate), and 2 parts by weight of t-butylperoxybenzoate initiator. The poly(vinyl esters)s were poly(vinyl propionate), poly(vinyl pivalate), poly(vinyl nonanate), poly(vinyl butyrate), poly(vinyl neodecanoate), and poly(vinyl neononanate). The blends were prepared by mixing the capped-PPE, the poly(vinyl ester), and the trimethylolpropane trimethacrylate at about 50-80°C. The resulting solutions were cooled to about 40-60°C before addition of the initiator. The compositions were cured at 150°C. All blends showed phase separation as indicated by the opaque white appearance of the cured discs. This opaque appearance indicates phase separation, which is an important indication of cavitation in the cured specimens. Poly(vinyl propionate) and poly(vinyl pivalate) produced the highest level of whitening.

### EXAMPLES 80 TO 82, COMPARATIVE EXAMPLE 9

Four compositions were prepared to illustrate the effect of polysiloxane compounds on shrinkage. The functionalized poly(arylene ether) was provided as a 35 weight percent solution in styrene of a methacrylate-capped poly(2,6-dimethyl-1,4-phenylene ether) having an intrinsic viscosity of 0.12 dL/g. A vinyl-terminated polydimethylsiloxane (i.e., a polydimethylsiloxane have a vinyl group on each end) was obtained from Aldrich Chemical Company. A polydimethylsiloxane-co-methyl-3-hydroxypropylsiloxane-*graft*-poly(ethylene-propylene) glycol was obtained from Aldrich Chemical Company. A hydroxy-terminated polydimethylsiloxane was obtained from Aldrich Chemical Company. Shrinkage was measured as described in Examples 1-7. Compositions and shrinkage values are provided in Table 10. The results show that addition of the vinyl-terminated and dihydroxy-terminated polydimethylsiloxanes reduced the shrinkage of the composition.

**Table 10**

| | C. Ex. 9 | Ex. 80 | Ex. 81 | Ex. 82 |
|---|---|---|---|---|
| COMPOSITION | | | | |
| PPO-MAA/styrene solution (pbw) | 85 | 85 | 85 | 85 |
| Trimethylolpropane trimethacrylate (pbw) | 20 | 20 | 20 | 20 |
| Vinyl-terminated polydimethylsiloxane (pbw) | 0 | 10 | 0 | 0 |
| Polydimethylsiloxane-co-methyl-3-hydroxypropylsiloxane-*graft*-poly(ethylene-propylene) glycol (pbw) | 0 | 0 | 10 | 0 |
| Hydroxy-terminated polydimethylsiloxane (pbw) | 0 | 0 | 0 | 10 |
| Zinc Stearate (pbw) | 3 | 3 | 3 | 3 |
| t-Butylperoxybenzoate (pbw) | 2 | 2 | 2 | 2 |
| Calcium carbonate (pbw) | 220 | 240 | 240 | 240 |
| Glass fibers (pbw) | 83 | 85 | 88 | 88 |
| PROPERTIES | | | | |
| Shrinkage (%) | 0.18 | 0.052 | 0.21 | 0.072 |

### EXAMPLES 83 TO 92, COMPARATIVE EXAMPLES 10-12

Thirteen compositions were prepared varying in amounts of three polymeric additives, and amounts of magnesium oxide, titanium dioxide, and calcium carbonate. Components are as described above, except for a maleic anhydride-functionalized polybutadiene having a number average molecular weight of 5,300 AMU and 18-33% 1,2-vinyl content, obtained as RICON® 131MA5 from Sartomer; a calcium carbonate having a particle size of 6 micrometers, obtained as CamelFil 6µ; and chopped one inch glass roving, obtained as PPG 5530 from PPG.

Batches of filled resin, 18 kg in size, were compounded using a Cowles blade mixer in five-gallon pails by first heating the base PPO in styrene resin and crosslinker to 35°C. Calcium carbonate, preheated in a cement mixer with a kerosene forced-air heater to between 55°C and 65°C, was then combined with titanium oxide and zinc stearate and added to form a paste. Polymeric additives were incorporated next, and then, immediately before coating, the magnesium oxide and initiator were added.

Sheet molding compound (SMC) was produced from the compositions using a 60 cm wide line. The line included various elements to add heat to the process. The aluminum plates beneath both doctor boxes were heated with circulating water to bring the surface temperatures of the first and second boxes to 35°C and 45°C, respectively. Hot water at 90°C was circulated through the compaction rollers, and the entire compaction area was enclosed and maintained at 40°C with the aid of a warm air convection heater. The doctor blades on both resin boxes were set with a 0.098 inch gap. Pressure on the compactor roles was set at 10 psi at the entrance, 20 psi for rolls 2 through 8, and at 40 psi on the exit roller.

Sheet molding compounds were compression molded using a Class-A mold manufactured by ToolPlas of Windsor, Ontario, Canada. Stacks of four 15 centimeter SMC squares weighing 650 g each were formed into 3 mm thick by 30 cm square plaques by compression molding at 150°C and 1200 psi for 2 minutes. Thus, the typical charge coverage on the molding area was 25%, but in limited studies complete coverage was explored.

For shrinkage measurements, each molded plaque was clamped flat into a specially made jig and the deviation from a calibrated part width was measured at two points on orthogonal sides. Each plaque was rotated 90 degrees and remeasured to minimize part orientation effects. Shrinkage was calculated relative to the zero calibrations established by the manufacturer of the device. Three plaques were tested for each formulation and the average and standard deviation for each composition are provided in Table 11. At least a four-fold reduction in shrinkage was obtained when the polymeric additive combination of a poly(ethylene-butene) and a polybutadiene was employed (Exs. 83-92 vs. C. Exs. 10-12).

Waviness and orange peel were measured as described above, using surfaces painted gloss black. Examples 83-92 comprising polymeric additives exhibited substantially lower waviness and orange peel values than Comparative Examples 10-12 lacking polymeric additives.

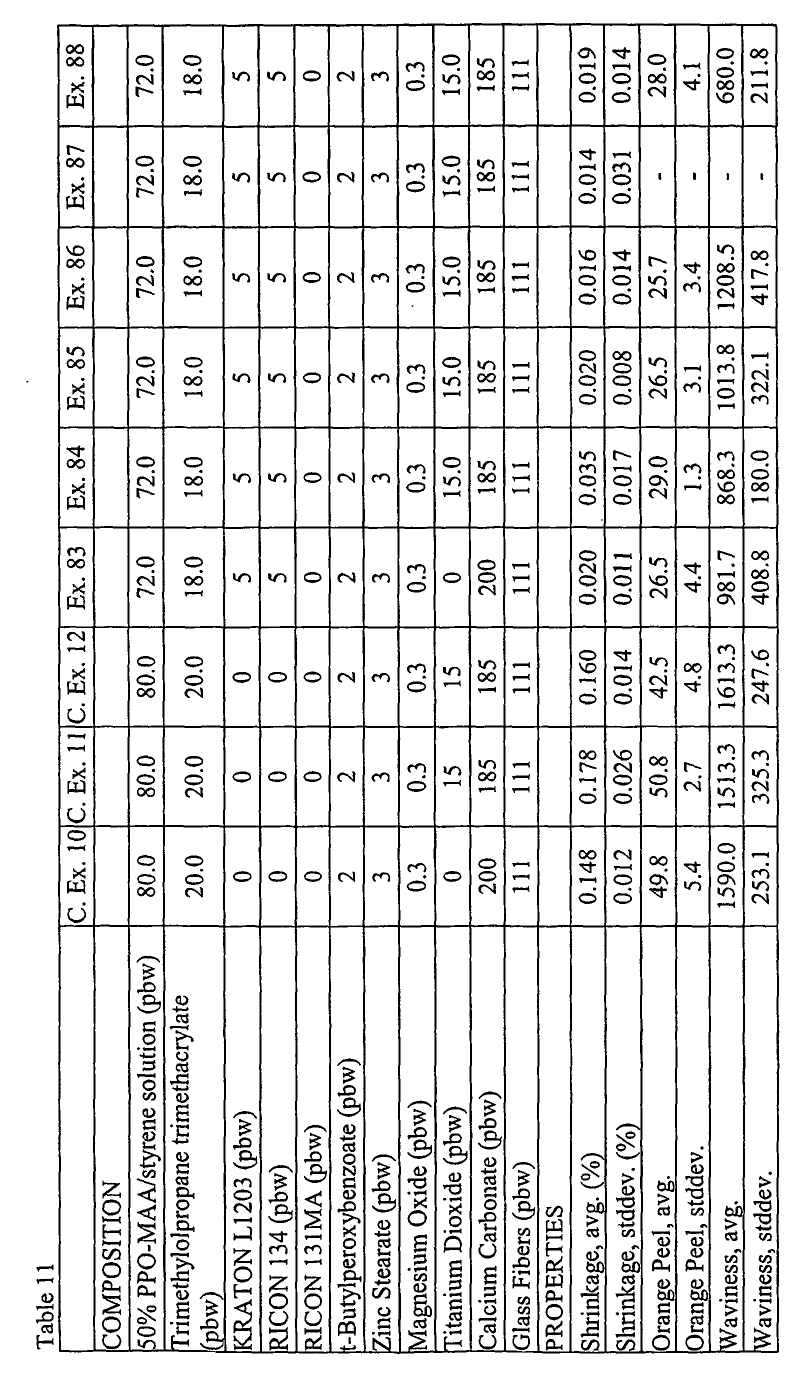

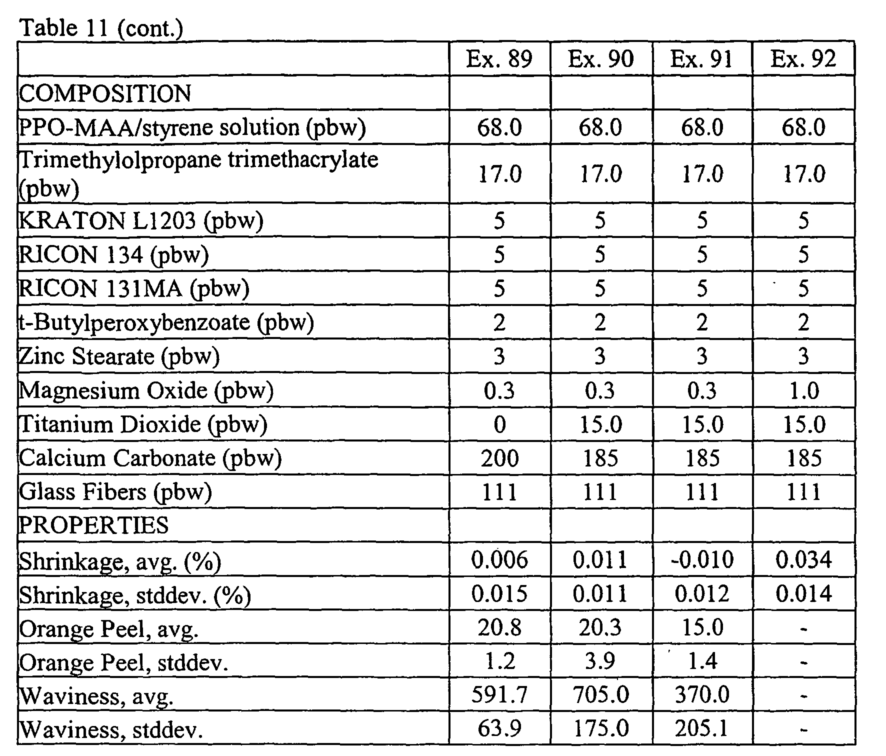

The results of the above experiments show that the compositions comprising the polymeric additives exhibit reduced shrinkage and improved surface smoothness relative to compositions without the polymeric additives.

### EXAMPLES 93-97, COMPARATIVE EXAMPLES 13-14

Five compositions (Ex. 93-97) were prepared to illustrate the effect of polybutene compounds on uncured composition viscosity. The components of the compositions tested and comparative examples (C. Ex. 13-14) are provided in Table 12. The amount of polybutene is in parts by weight based on 100 parts by weight of the total composition. Polybutene was mixed into a base formulation comprising 20 weight % TMPTMA crosslinker and 80 weight % of a mix of 50 weight % of a methacrylate-capped poly(2,6-dimethyl-1,4-phenylene ether) having an intrinsic viscosity of 0.12 dL/g (at 25°C in chloroform) in 50 weight % styrene. The polybutenes used are available commercially under the trade name INDOPOL® Polybutenes manufactured by Amoco. The polybutene number average molecular weights (Mₙ) ranged from 227 to 750 atomic mass units (AMU). The components were mixed together at about 70-80°C and then allowed to cool about 12 hours resulting in the formation of sol-gels.

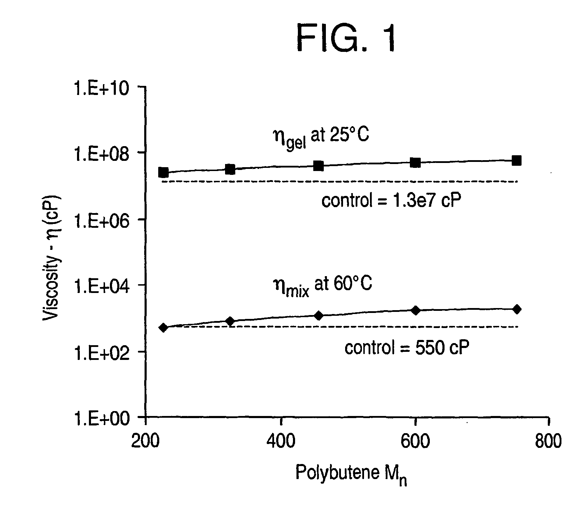

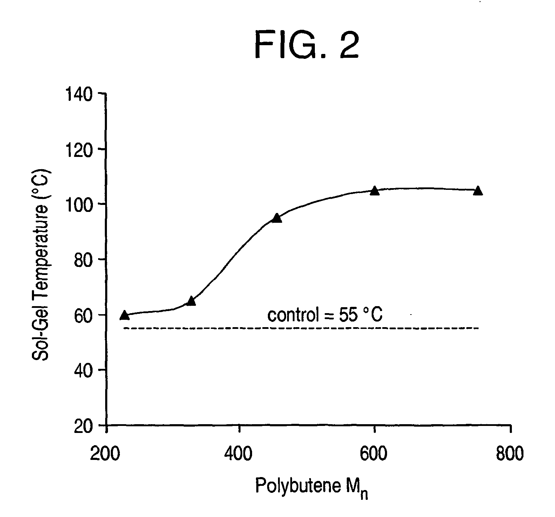

A control example (Comparative Example 13) and a polybutadiene example (polybutadiene, Ricon 134, Mn=8000 sold by Sartomer) (Comparative Example 14) were prepared in the same manner as Examples 93-97. Viscosities of the compositions were measured using a Brookfield viscometer, model DVII+, equipped with a T-bar spindle and given the units centipose (cP). The viscosity of the composition immediately after mixing (ηₘᵢₓ) was measured at approximately 60°C. The viscosity of the sol-gels (η_{gel}) formed from the mixed compositions after cooling and standing overnight was measured at 25°C. The sol-gel transition temperature (T_{sol-gel}) was also measured for each formulation by heating sealed vials of the gels in a controlled temperature bath. The temperature of the bath was incrementally raised and the samples were checked for flow upon inversion. All measurements are found in Table 13 and graphically displayed in Figures 1 and 2.

**Table 12**

| | Ex. 93 | Ex. 94 | Ex. 95 | Ex. 96 | Ex. 97 | C. Ex. 13 | C. Ex. 14 |
|---|---|---|---|---|---|---|---|
| COMPOSITION | | | | | | | |
| PPO-MAA/styrene solution (pbw) | 76 | 76 | 76 | 76 | 76 | 80 | 76 |
| Trimethylolpropane trimethacrylate (pbw) | 19 | 19 | 19 | 19 | 19 | 20 | 19 |
| Polybutadiene Mₙ=8000 (pbw) | - | - | - | - | - | - | 5.0 |
| Indopol L-4, Mₙ 227 (pbw) | 5.0 | - | - | - | - | - | - |
| Indopol L-14, Mₙ 326 (pbw) | - | 5.0 | - | - | - | - | - |
| Indopol L-50, Mₙ 455 (pbw) | - | - | 5.0 | - | - | - | - |
| Indopol H-15, Mₙ 600 (pbw) | - | - | - | 5.0 | - | - | - |
| Indopol H-40, Mₙ 750 (pbw) | - | - | - | - | 5.0 | - | - |

**Table 13**

| | Mₙ polybutene | ηₘᵢₓ at 60°C (cP) | η_{gel} at 25°C (cP) | T_{sol-gel} (°C) |
|---|---|---|---|---|
| Ex. 93 | 227 | 520 | 2.6E+07 | 60 |
| Ex. 94 | 326 | 800 | 3.4E+07 | 65 |
| Ex. 95 | 455 | 1220 | 4.0E+07 | 95 |
| Ex. 96 | 600 | 1700 | 5.0E+07 | 105 |
| Ex. 97 | 750 | 1850 | 5.9E+07 | 105 |
| | | | | |
| C. Ex. 13 | - | 550 | 1.30E+07 | 55 |
| C. Ex. 14 | - | 1250 | 1.00E+07 | 55 |

As depicted in Figure 1 and from Table 13, the results show that the addition of 5 pbw of a polybutene having a Mn of about 326 to about 600 causes only a small increase (up to about 1300 cP) in initial viscosity at the mixing temperature (ηₘᵢₓ) as compared to the control sample without polybutene (Comparative Example 13). Upon cooling to 25°C a sol-gel is formed and the polybutene dramatically increases the composition viscosity by as much as 4.6 x 10⁷ cP (Figure 1, η_{gel}). After formation of the sol-gel, the polybutene sol-gel examples exhibit transition temperatures that range between about 60°C to about 105°C depending on polybutene molecular weight (Figure 2). The Comparative Examples 13 and 14 exhibit lower transition temperatures (55°C).

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from essential scope thereof. Therefore, it is intended that the invention not be limited to the particular embodiment disclosed as the best mode contemplated for carrying out this invention, but that the invention will include all embodiments falling within the scope of the appended claims.

All cited patents, patent applications, and other references are incorporated herein by reference in their entirety.

## Claims

1. A curable composition, comprising:
a functionalized poly(arylene ether);
an alkenyl aromatic monomer;
an acryloyl monomer; and
a polybutene,
wherein the polybutene has a number average molecular weight of greater than or equal to about 300 atomic mass units.

2. The composition of Claim 1, wherein the curable composition is a sol-gel having a sol-gel transition temperature of greater than about 60°C.

3. The composition of any of the preceding claims, wherein the functionalized poly(arylene ether) is a capped poly(arylene ether) having the structure
Q(J-K)_{y}
wherein Q is the residuum of a monohydric, dihydric, or polyhydric phenol; y is 1 to 100; J comprises repeating structural units having the formula 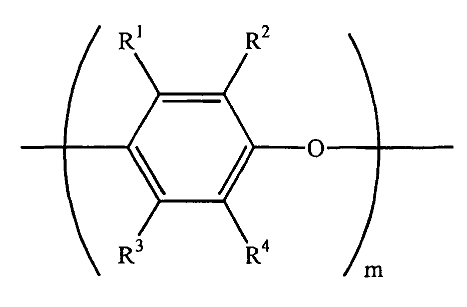 wherein R¹-R⁴ are each independently selected from the group consisting of hydrogen, halogen, primary or secondary C₁-C₁₂ alkyl, C₂-C₁₂ alkenyl, C₂-C₁₂ alkynyl, C₁-C₁₂ aminoalkyl, C₁-C₁₂ hydroxyalkyl, phenyl, C₁-C₁₂ haloalkyl, C₁-C₁₂ hydrocarbonoxy, and C₂-C₁₂ halohydrocarbonoxy wherein at least two carbon atoms separate the halogen and oxygen atoms; m is 1 to about 200; and K is a capping group selected from the group consisting of 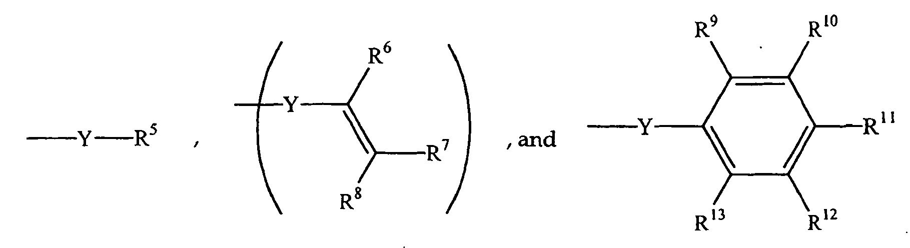 wherein R⁵ is C₁-C₁₂ alkyl; R⁶-R⁸ are each independently selected from the group consisting of hydrogen, C₁-C₁₂ alkyl, C₂-C₁₂ alkenyl, C₆-C₁₈ aryl, C₇-C₁₈ alkyl-substituted aryl, C₇-C₁₈ aryl-substituted alkyl, C₂-C₁₂ alkoxycarbonyl, C₇-C₁₈ aryloxycarbonyl, C₈-C₁₈ alkyl-substituted aryloxycarbonyl, C₈-C₁₈ aryl-substituted alkoxycarbonyl, nitrile, formyl, carboxylate, imidate, and thiocarboxylate; R⁹-R¹³ are each independently selected from the group consisting of hydrogen, halogen, C₁-C₁₂ alkyl, hydroxy, and amino; and wherein Y is a divalent group selected from the group consisting of 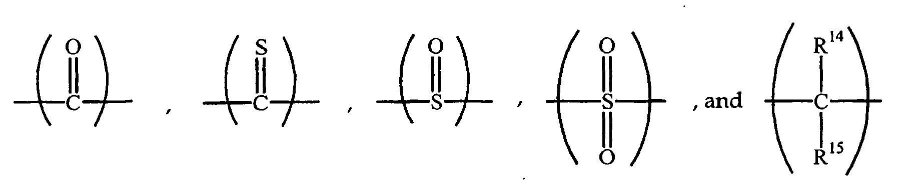 wherein R¹⁴ and R¹⁵ are each independently selected from the group consisting of hydrogen and C₁-C₁₂ alkyl.

4. The composition of Claim 1, wherein the functionalized poly(arylene ether) is a ring-functionalized poly(arylene ether) comprising repeating structural units having the formula 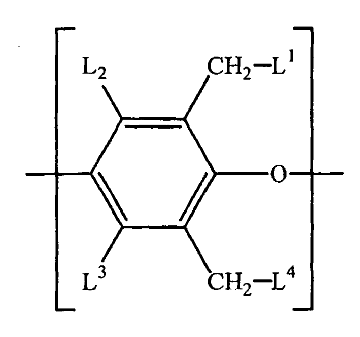 wherein each L¹-L⁴ is independently hydrogen, an alkenyl group, or an alkynyl group; wherein the alkenyl group is represented by 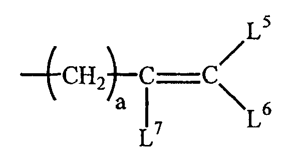 wherein L⁵-L⁷ are independently hydrogen or methyl, and a is an integer from 1 to 4; wherein the alkynyl group is represented by 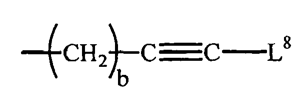 wherein L⁸ is hydrogen, methyl, or ethyl, and b is an integer from 1 to 4; and wherein about 0.02 mole percent to about 25 mole percent of the total L¹-L⁴ substituents in the ring-functionalized poly(arylene ether) are alkenyl and/or alkynyl groups.

5. The composition of any of the preceding claims, wherein the alkenyl aromatic monomer has the structure 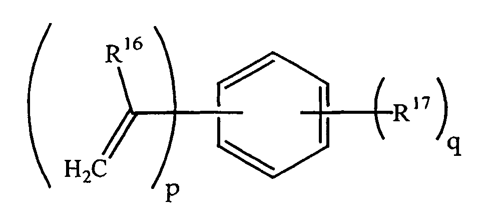 wherein each R¹⁶ is independently selected from the group consisting of hydrogen, C₁-C₁₂ alkyl, C₂-C₁₂ alkenyl, C₂-C₁₂ alkynyl, and C₆-C₁₈ aryl; each R¹⁷ is independently selected from the group consisting of hydrogen, halogen; C₁-C₁₂ alkyl, C₁-C₁₂ alkoxyl, and C₆-C₁₈ aryl; p is 1 to 4; and q is 0 to 5.

6. The composition of any of Claims 1-5, wherein the acryloyl monomer comprises at least one acryloyl moiety having the structure 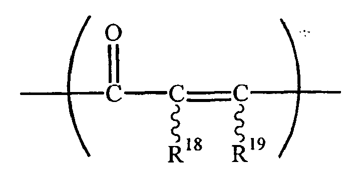 wherein R¹⁸ and R¹⁹ are each independently selected from the group consisting of hydrogen and C₁-C₁₂ alkyl, and wherein R¹⁸ and R¹⁹ may be disposed either cis or *trans* about the carbon-carbon double bond.

7. The composition of any of Claims 1-5, wherein the acryloyl monomer comprises at least one acryloyl moiety having the structure 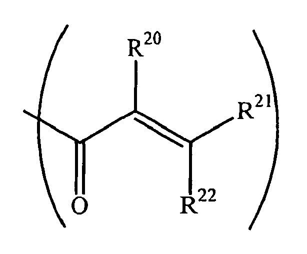 wherein R²⁰-R²² are each independently selected from the group consisting of hydrogen, C₁-C₁₂ alkyl, C₂-C₁₂ alkenyl, C₆-C₁₈ aryl, C₇-C₁₈ alkyl-substituted aryl, C₇-C₁₈ aryl-substituted alkyl, C₂-C₁₂ alkoxycarbonyl, C₇-C₁₈ aryloxycarbonyl, C₈-C₁₈ alkyl-substituted aryloxycarbonyl, C₈-C₁₈ aryl-substituted alkoxycarbonyl, nitrile, formyl, carboxylate, imidate, and thiocarboxylate.

8. The composition of any of Claims 1-7, further comprising at least one curing catalyst selected from the group consisting of benzoyl peroxide, dicumyl peroxide, methyl ethyl ketone peroxide, lauryl peroxide, cyclohexanone peroxide, t-butyl hydroperoxide, t-butyl benzene hydroperoxide, t-butyl peroctoate, 2,5-dimethylhexane-2,5-dihydroperoxide, 2,5-dimethyl-2,5-di(t-butylperoxy)-hex-3-yne, di-t-butylperoxide, t-butylcumyl peroxide, alpha,alpha'-bis(t-butylperoxy-m-isopropyl)benzene, 2,5-dimethyl-2,5-di(t-butylperoxy)hexane, dicumylperoxide, di(t-butylperoxy isophthalate, t-butylperoxybenzoate, 2,2-bis(t-butylperoxy)butane, 2,2-bis(t-butylperoxy)octane, 2,5-dimethyl-2,5-di(benzoylperoxy)hexane, di(trimethylsilyl)peroxide, trimethylsilylphenyltriphenylsilyl peroxide, 2,3-dimethyl-2,3-diphenylbutane, 2,3-trimethylsilyloxy-2,3-diphenylbutane, and mixtures comprising at least one of the foregoing curing catalysts.

9. A cured composition, comprising the reaction product of the composition of any of Claims 1-8.

10. A curable composition, comprising:
a functionalized poly(arylene ether);
an aklenyl aromatic monomer;
an acryloyl monomer;
a polybutene; and
a filler,
wherein the polybutene has a number average molecular weight of greater than or equal to about 300 atomic mass units and the composition has a sol-gel transition temperature greater than about 60°C.

## Patentansprüche

1. Eine härtbare Zusammensetzung umfassend:
einen funktionalisierten Poly(arylenether);
ein aromatisches Alkenyl-Monomer;
ein Acryloylmonomer; und
ein Polybuten,
wobei das Polybuten ein Zahlenmittel des Molekulargewichts von größer als oder gleich etwa 300 Atommasseneinheiten hat.

2. Zusammensetzung nach Anspruch 1, wobei die härtbare Zusammensetzung ein Sol-Gel ist, welches eine Sol-Gel-Übergangstemperatur von größer als 60 °C hat.

3. Zusammensetzung nach einem der vorhergehenden Ansprüche, wobei der funktionalisierte Polyarylenether ein gedeckelter Polyarylenether ist, der die Struktur hat
Q(J-K)_{y}
worin Q der Rest eines einwertigen, zweiwertigen oder mehrwertigen Phenols ist; y 1 bis 100 ist; J wiederkehrende Struktureinheiten aufweist, die die Formel haben 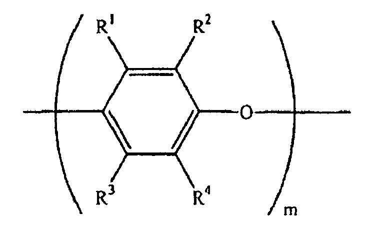 worin R¹-R⁴ jeweils unabhängig ausgewählt sind aus der Gruppe bestehend aus Wasserstoff, Halogen, primärem oder sekundärem C₁-C₁₂ Alkyl, C₂-C₁₂ Alkenyl, C₂-C₁₂ Alkinyl, C₁-C₁₂ Aminoalkyl, C₁-C₁₂ Hydroxyalkyl, Phenyl, C₁-C₁₂ Haloalkyl, C₁-C₁₂ Hydrocarbonoxy, und C₂-C₁₂ Halohydrocarbonoxy, worin wenigstens zwei Kohlenstoffatome die Halogen und Sauerstoffatome separieren; m 1 bis etwa 200 ist; und K eine Decklungsgruppe ausgewählt aus der Gruppe bestehend aus 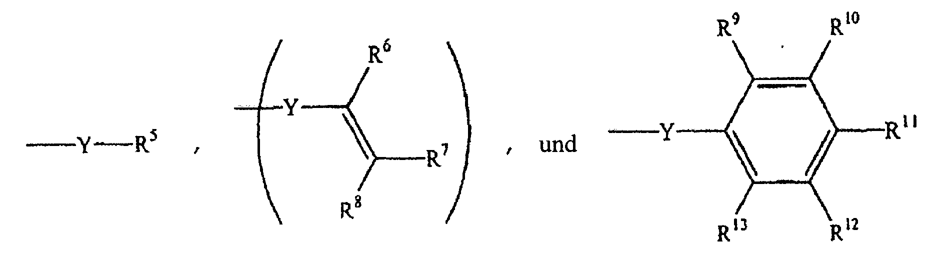 worin R⁵ C₁-C₁₂ Alkyl ist; R⁶-R⁸ jeweils unabhängig ausgewählt sind aus der Gruppe bestehend aus Wasserstoff, C₁-C₁₂ Alkyl, C₂-C₁₂ Alkenyl, C₈-C₁₈ Aryl, C₇-C₁₈ Alkyl substituiertem Aryl, C₆-C₁₈ Aryl substituiertem Alkyl, C₂-C₁₂ Alkoxycarbonyl, C₇-C₁₈ Aryloxycarbonyl, C₈-C₁₈ Alkyl substituiertem Aryloxycarbonyl, C₈-C₁₈ Aryl substituiertem Alkoxycarbonyl, Nitril, Formyl, Carboxylat, Imidat, und Thiocarboxylat; R⁹-R¹³ jeweils unabhängig ausgewählt sind aus der Gruppe bestehend aus Wasserstoff , Halogen, C₁-C₁₂ Alkyl, Hydroxy, und Amino, und wobei Y eine divalente Gruppe ist ausgewählt aus der Gruppe bestehend aus 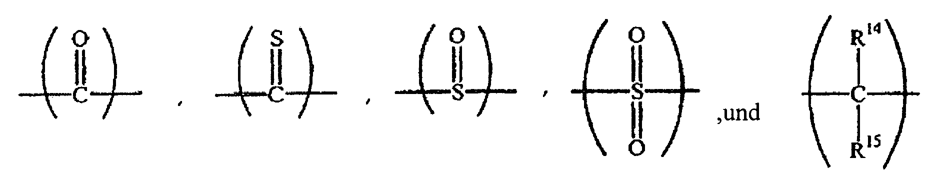 worin R¹⁴ uns R¹⁵ jeweils unabhängig ausgewählt sind aus der Gruppe bestehend aus Wasserstoff und C₁-C₁₂ Alkyl.

4. Zusammensetzung nach Anspruch 1, wobei der funktionalisierte Polyarylenether ein Ring-funktionalisierter Polyarylenether ist, der wiederkehrende Struktureinheiten aufweist, die die Formel haben 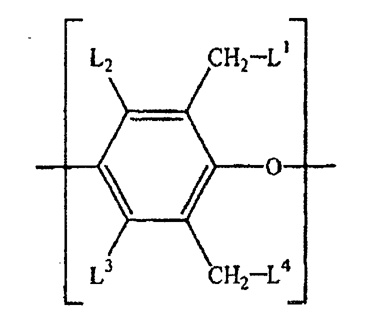 worin jedes L¹-L⁴ unabhängig Wasserstoff, eine Alkenylgruppe oder ein Alkinylgruppe ist; wobei die Alkenylgruppe dargestellt wird durch 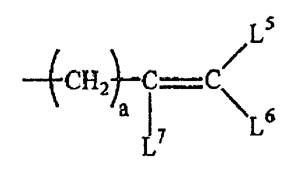 worin L⁵-L⁷ jeweils unabhängig Wasserstoff oder Methyl sind und a eine ganze Zahl von 1 bis 4 ist; wobei die Alkinylgruppe dargestellt wird durch 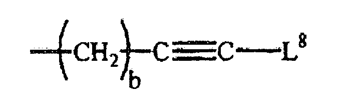 worin L⁸ Wasserstoff, Methyl oder Ethyl ist und b eine ganze Zahl von 1 bis 4 ist; und wobei etwa 0,02 Mol-% bis zu etwa 25 Mol-% der gesamten L¹-L⁴ Substituenten in dem Ring-funktionalisierten Polyarylenether Alkenyl- und/oder Alkinylgruppen sind.

5. Zusammensetzung nach einem der vorhergehenden Ansprüche, wobei das aromatische Alkenyl-Monomer die Struktur hat 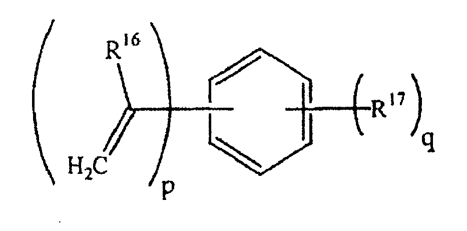 worin jedes R¹⁶ unabhängig ausgewählt ist aus der Gruppe bestehend aus Wasserstoff, C₁-C₁₂ Alkyl, C₂-C₁₂ Alkenyl, C₂-C₁₂ Alkinyl, und C₆-C₁₈ Aryl; jedes R¹⁷ unabhängig ausgewählt ist aus der Gruppe bestehend aus Wasserstoff, Halogen, C₁-C₁₂ Alkyl, C₁-C₁₂ Alkoxyl, und C₆-C₁₈ Aryl; p 1 bis 4 ist; und q 0 bis 5 ist.

6. Zusammensetzung nach einem der Ansprüche 1-5, wobei das Acryloylmonomer wenigstens einen Acryloylrest umfasst der die Struktur hat 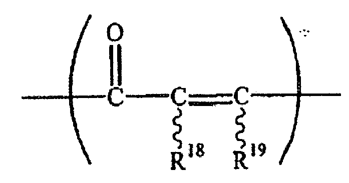 worin R¹⁸ und R¹⁹ jeweils unabhängig ausgewählt sind aus der Gruppe bestehend aus Wasserstoff und C₁-C₁₂ Alkyl, und wobei R¹⁸ und R¹⁹ entweder in cis oder trans Stellung zur Kohlenstoff-Kohlenstoff-Doppelbindung angeordnet sein können.

7. Zusammensetzung nach einem der Ansprüche 1 bis 5, wobei das Acryloylmonomer wenigstens einen Acryloylrest umfasst, der die Struktur hat 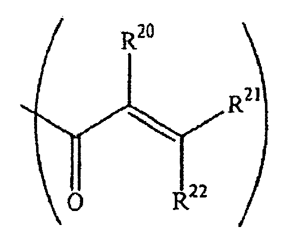 worin R²⁰-R²² jeweils unabhängig ausgewählt sind aus der Gruppe bestehend aus Wasserstoff, C₁-C₁₂ Alkyl, C₂-C₁₂ Alkenyl, C₆-C₁₈ Aryl, C₇-C₁₈ Alkyl substituiertem Aryl, C₇-C₁₈ Aryl substituiertem Alkyl, C₂-C₁₂ Alkoxycarbonyl, C₇-C₁₈ Aryloxycarbonyl, C₈-C₁₈ Alkyl substituiertem Aryloxycarbonyl, C₈-C₁₈ Aryl substituiertem Alkoxycarbonyl, Nitril, Formyl, Carboxylat, Imidat, und Thiocarboxylat.

8. Zusammensetzung nach einem der Ansprüche 1-7 weiterhin aufweisend wenigstens einen Härtungskatalysator ausgewählt aus der Gruppe bestehend aus Benzoylperoxid, Dicumylperoxid, Methylethylketonperoxid, Laurylperoxid, Cyclohexanonperoxid, t-Butylhydroperoxid, t-Butylbenzolhydroperoxid, t-Butylperoctoat, 2,5-Dimethylhexan-2,5-dihydroperoxid, 2,5-Dimethyl-2,5-di(t-butylperoxy)-hex-3-in, Di-t-butylperoxid, t-Butylcumylperoxid, alpha,alpha'-Bis(t-butylperoxy-m-isopropyl)benzol, 2,5-Dimethyl-2,5-di(t-butylperoxy)hexan, Dicumylperoxid, Di(t-butylperoxy)isophthalat, t-Butylperoxybenzoat, 2,2-Bis(t-butylperoxy)butan, 2,2-Bis(t-butylperoxy)octan, 2,5-Dimethyl-2,5-die(benzoylperoxy)hexan, Di(trimethylsilyl)peroxid, Trimethylsilylphenyltriphenylsilylperoxid, 2,3-Dimethyl-2,3-diphenylbutan, 2,3-Trimethylsilyloxy-2,3-diphenylbutan, und Mischungen aufweisend wenigstens einen der vorstehenden Härtungskatalysatoren.

9. Eine gehärtete Zusammensetzung aufweisend das Reaktionsprodukt der Zusammensetzung aus einem der Ansprüche 1 bis 8.

10. Eine härtbare Zusammensetzung aufweisend:
einen funktionalisierten Polyarylenether;
ein aromatisches Alkenyl-Monomer;
ein Acryloylmonomer;
ein Polybuten; und
einen Füllstoff,
wobei das Polybuten ein Zahlenmittel des Molekulargewichts von größer als oder gleich etwa 300 Atommasseneinheiten und die Zusammensetzung eine Sol-Gelübergangstemperatur größer als etwa 60 °C hat.

## Revendications

1. Composition durcissable, comprenant:
- un poly(arylène éther) fonctionnalisé,
- un monomère alcényl-aromatique,
- un monomère à groupe acryloyle,
- et un polybutène,
dans laquelle le polybutène présente une masse molaire moyenne en nombre supérieure ou égale à environ 300 unités de masse atomique.

2. Composition conforme à la revendication 1, laquelle composition durcissable est un sol-gel dont la température de transition sol-gel est supérieure à environ 60 °C.

3. Composition conforme à l'une des revendications précédentes,
dans laquelle le poly(arylène éther) est un poly(arylène éther) coiffé, qui présente la structure
Q(J-K)_{y}
dans laquelle
Q représente le résidu d'un monophénol, d'un diphénol ou d'un polyphénol,
l'indice y vaut de 1 à 100,
J représente une entité comprenant des motifs structuraux répétitifs de formule 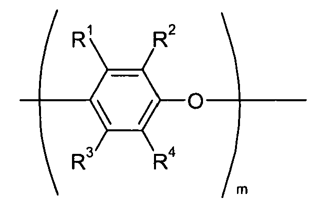 dans laquelle les symboles R¹ à R⁴ représentent chacun, indépendamment, une entité choisie dans l'ensemble formé par les atomes d'hydrogène et d'halogène et les groupes alkyle primaire ou secondaire en C₁₋₁₂, alcényle en C₂₋₁₂, alcynyle en C₂₋₁₂, aminoalkyle en C₁₋₁₂, hydroxyalkyle en C₁₋₁₂, phényle, halogénoalkyle en C₁₋₁₂, hydrocarbyloxy en C₁₋₁₂ et halogénohydrocarbyl-oxy en C₁₋₁₂ où il y a au moins deux atomes de carbone qui séparent les atomes d'halogène et d'oxygène, et l'indice m vaut de 1 à environ 200, et K représente un groupe coiffant choisi dans l'ensemble des groupes de formules 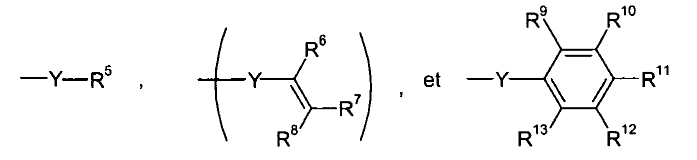 dans lesquelles R⁵ représente un groupe alkyle en C₁₋₁₂, les symboles R⁶ à R⁸ représentent chacun, indépendamment, une entité choisie dans l'ensemble formé par un atome d'hydrogène et les groupes alkyle en C₁₋₁₂, alcényle en C₂₋₁₂, aryle en C₆₋₁₈, alkyl-aryle en C₇₋₁₈, aryl-alkyle en C₇₋₁₈, alcoxycarbonyle en C₂₋₁₂, aryloxycarbonyle en C₇₋₁₈, alkyl-aryloxycarbonyle en C₈₋₁₈, aryl-alcoxycarbonyle en C₈₋₁₈, cyano, for-myle, carboxylate, imidate et thiocarboxylate, les symboles R⁹ à R¹³ représentent chacun, indépendamment, une entité choisie dans l'ensemble formé par les atomes d'hydrogène et d'halogène et les groupes alkyle en C₁₋₁₂, hydroxyle et amino, et Y représente un groupe divalent choisi dans l'ensemble formé par ceux de formules 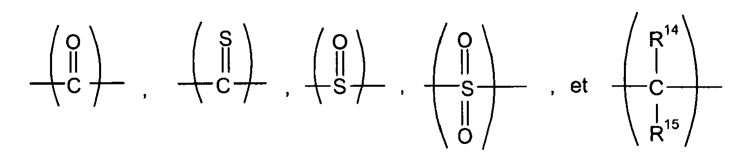 où R¹⁴ et R¹⁵ représentent chacun, indépendamment, une entité choisie dans l'ensemble formé par un atome d'hydrogène et les groupes alkyle en C₁₋₁₂.

4. Composition conforme à la revendication 1, dans laquelle le poly(arylène éther) fonctionnalisé est un poly(arylène éther) à cycle fonctionnalisé, qui comporte des motifs structuraux répétitifs de formule 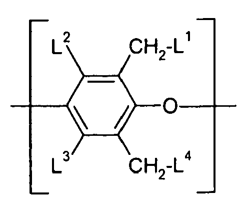 dans laquelle chacun des symboles L¹ à L⁴ représente indépendamment un atome d'hydrogène ou un groupe alcényle ou alcynyle, lequel groupe alcényle est représenté par la formule 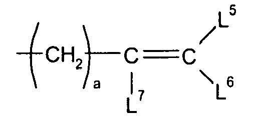 dans laquelle les symboles L⁵ à L⁷ représentent chacun, indépendamment, un atome d'hydrogène ou un groupe méthyle, et l'indice a est un nombre entier valant de 1 à 4, et lequel groupe alcynyle est représenté par la formule 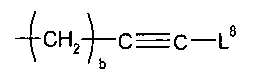 dans laquelle L⁸ représente un atome d'hydrogène ou un groupe méthyle ou éthyle, et l'indice b est un nombre entier valant de 1 à 4, et dans lequel poly(arylène éther) à cycle fonctionnalisé à peu près 0,02 à 25 % en moles de tous les substituants représentés par les symboles L¹ à L⁴ sont des groupes alcényle et/ou alcynyle.

5. Composition conforme à l'une des revendications précédentes,
dans laquelle le monomère alcényl-aromatique présente la structure suivante : 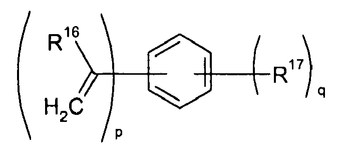 dans laquelle chaque symbole R¹⁶ représente indépendamment une entité choisie dans l'ensemble formé par un atome d'hydrogène et les groupes alkyle en C₁₋₁₂, alcényle en C₂₋₁₂, alcynyle en C₂₋₁₂ et aryle en C₆₋₁₈, chaque symbole R¹⁷ représente indépendamment une entité choisie dans l'ensemble formé par les atomes d'hydrogène et d'halogène et les groupes alkyle en C₁₋₁₂, alcoxy en C₁₋₁₂ et aryle en C₆₋₁₈, l'indice p vaut de 1 à 4, et l'indice q vaut de 0 à 5.

6. Composition conforme à l'une des revendications 1 à 5, dans laquelle le monomère à groupe acryloyle comporte au moins un groupe acryloyle de structure suivante : 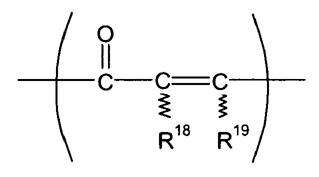 dans laquelle R¹⁸ et R¹⁹ représentent chacun, indépendamment, une entité choisie dans l'ensemble formé par un atome d'hydrogène et les groupes alkyle en C₁₋₁₂, et ces entités représentées par R¹⁸ et R¹⁹ peuvent être dispo-sées en configuration cis ou *trans* par rapport à la double liaison carbone-carbone.

7. Composition conforme à l'une des revendications 1 à 5, dans laquelle le monomère à groupe acryloyle comporte au moins un groupe acryloyle de structure suivante : 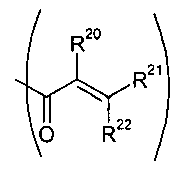 dans laquelle les symboles R²⁰ à R²² représentent chacun, indépendamment, une entité choisie dans l'ensemble formé par un atome d'hydrogène et les groupes alkyle en C₁₋₁₂, alcényle en C₂₋₁₂, aryle en C₆₋₁₈, alkyl-aryle en C₇₋₁₈, aryl-alkyle en C₇₋₁₈, alcoxycarbonyle en C₂₋₁₂, aryloxycarbonyle en C₇₋₁₈, alkyl-aryloxycarbonyle en C₈₋₁₈, aryl-alcoxycarbonyle en C₈₋₁₈, cyano, for-myle, carboxylate, imidate et thiocarboxylate.

8. Composition conforme à l'une des revendications 1 à 7, qui comporte en outre au moins un catalyseur de durcissement choisi dans l'ensemble formé par les suivants : peroxyde de benzoyle, peroxyde de dicumyle, peroxyde de méthyl-éthyl-cétone, peroxyde de lauryle, peroxyde de cyclohexanone, t-butyl-hydroperoxyde, hydroperoxyde de t-butyl-benzène, peroctoate de t-butyle, 2,5-dihydroperoxy-2,5-diméthyl-hexane, 2,5-diméthyl-2,5-di(t-butyl-peroxy)-hex-3-yne, peroxyde de di-t-butyle, peroxyde de t-butyle et cumyle, m-bis(α-t-butylperoxy-isopropyl)-benzène, 2,5-diméthyl-2,5-di(t-butyl-peroxy)-hexane, peroxyde de dicumyle, diperoxy-isophtalate de di-t-butyle, perbenzoate de t-butyle, 2,2-bis(t-butylperoxy)-butane, 2,2-bis(t-butylperoxy)-octane, 2,5-diméthyl-2,5-di(benzoyl-peroxy)-hexane, peroxyde de bis(triméthylsilyle), peroxyde de triméthylsilylphényle et triphénylsilyle, 2,3-diméthyl-2,3-diphényl-butane, 2,3-bis(triméthylsilyl-oxy)-2,3-diphényl-butane, et mélanges comprenant au moins l'un de ces catalyseurs de durcissement.

9. Composition durcie, comprenant le produit de réaction d'une composition conforme à l'une des revendications 1 à 8.

10. Composition durcissable, comprenant :
- un poly(arylène éther) fonctionnalisé,
- un monomère alcényl-aromatique,
- un monomère à groupe acryloyle,
- un polybutène,
- et une charge,
dans laquelle le polybutène présente une masse molaire moyenne en nombre supérieure ou égale à environ 300 unités de masse atomique, et laquelle composition présente une température de transition sol-gel qui est supérieure à environ 60 °C.
